(19) Europäisches Patentamt
European Patent Office
Office européen des brevets

(11) **EP 2 410 019 A1**

(12) **EUROPEAN PATENT APPLICATION**
published in accordance with Art. 153(4) EPC


(43) Date of publication:
**25.01.2012 Bulletin 2012/04**

(21) Application number: **10753621.1**

(22) Date of filing: **17.03.2010**

(51) Int Cl.:
***C08L 77/00*** *(2006.01)* ***A23B 4/03*** *(2006.01)*
***B32B 27/34*** *(2006.01)* ***C08J 5/18*** *(2006.01)*
***C08L 39/06*** *(2006.01)*

(86) International application number:
**PCT/JP2010/055146**

(87) International publication number:
**WO 2010/107131 (23.09.2010 Gazette 2010/38)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.03.2009 JP 2009063899**
**17.03.2009 JP 2009063900**
**03.04.2009 JP 2009090816**



(71) Applicant: **Ube Industries, Ltd.**
**Ube-shi**
**Yamaguchi 755-8633 (JP)**

(72) Inventors:
- **YAMAGUCHI, Yutaka**
  **Ube-shi**
  **Yamaguchi 755-8633 (JP)**
- **NAKAMURA, Koji**
  **Ube-shi**
  **Yamaguchi 755-8633 (JP)**

(74) Representative: **Hoeger, Stellrecht & Partner Patentanwälte**
**Uhlandstrasse 14c**
**70182 Stuttgart (DE)**


# (54) POLYAMIDE RESIN COMPOSITION, FILM COMPRISING SAME, AND LAMINATED POLYAMIDE FILM


(57) The invention relates to a polyamide composition for film, comprising a polyamide resin, a vinyl amide-based polymer and a crosslinked poly(N-vinyl lactam), and a film comprising the same. More specifically, the present invention relates to a polyamide resin composition for a film, ensuring that the film has a matte texture, good film appearance with very little yellow tint, large water vapor permeability and excellent smoking treatment effect and that problems such as clogging of a filter can be reduced and continuous productivity is excellent, and a film comprising the same.


Fig.1

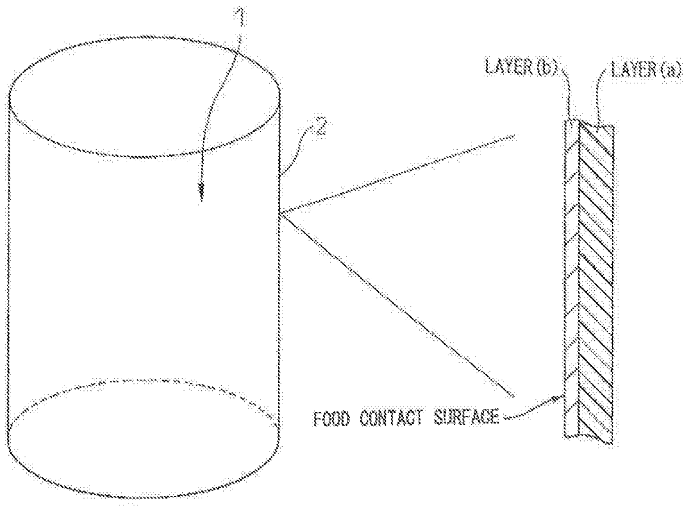


EP 2 410 019 A1

**Description**

TECHNICAL FIELD

The present invention relates to a polyamide composition for a film, comprising a polyamide resin, a vinyl amide-based polymer and a crosslinked poly(N-vinyl lactam), and a film comprising the same. More specifically, the present invention relates to a polyamide resin composition for a film, ensuring that the film has a matte texture, good film appearance with very little yellow tint, large water vapor permeability and excellent smoking treatment effect and that problems such as clogging of a filter can be reduced and continuous productivity is excellent, and a film comprising the same. The present invention also relates to a polyamide-based laminate film comprising at least two or more layers containing a layer (a) formed of (A1) a polyamide resin composition composed of a polyamide resin and a vinyl amide-based polymer and a layer (b) formed of (A2) a polyamide resin composition composed of a polyamide resin and a crosslinked poly(N-vinyl lactam), wherein the layer (b) formed of the polyamide resin composition (A2) is disposed as an exposed surface layer and the layer (a) formed of the polyamide resin composition (A1) is disposed on the side opposite the exposed surface with respect to the layer (b). More specifically, the present invention relates to a polyamide-based laminate film having good film appearance with very little yellow tint and large water vapor permeability and excellent smoking treatment effect, elution resistance and slipperiness.

BACKGROUND ART

A natural casing such as animal intestine or a fibrous casing obtained by coating and impregnating paper with viscose is used for smoking treatment of a processed meat product, such as ham and sausage or a cheese product or for cooking by heat treatment. However, an animal intestine is non-uniform in shape and strength and it is difficult to satisfy the demand for constant supply. Also, the fibrous casing has a preference because of its appearance giving a high-quality image but suffers from a problem that the amount of mass loss of the contents is large due to high water vapor permeability, the oxygen permeability is large due to putrefaction or mold growth in the contents during long-term storage, or odor or hard feel requires a pretreatment such as dipping in water before use.

On the other hand, a polyamide film such as polyamide 6 and polyamide 66, which has been used as a synthetic plastic casing, has the advantage that, for example, some smoking treatment effect is obtained under high humidity and the mechanical strength, impact strength, dimensional stability and oxygen barrier property are good for enabling long-term storage of the contents. However, the smoking effect is very small compared with the fibrous casing and the polyamide film is insufficient as a smoking casing.

As a technology for improving the smoking effect of the polyamide film, a film obtained by mixing a polyamide with a hydrophilic compound each in a specific amount and dispersing the hydrophilic compound to a specific length in a polyamide matrix has been proposed (see, Patent Document 1). As the hydrophilic compound, polyvinylpyrrolidone, polyvinyl alcohol, polyalkyloxazoline, polyalkylene glycol, polyvinyl alcohol ether, polyvinyl ether and cellulose ether are disclosed. Although the water vapor permeability of this film is excellent, a hydrophilic compound is highly and finely dispersed in a polyamide matrix and the film cannot offer a matte texture and is not enough to give a high-quality image. Furthermore, a polyamide film obtained by blending polyvinylpyrrolidone as the hydrophilic compound is disclosed, but this hydrophilic compound is indicated as being soluble in water at 20°C. According to the studies by the present inventors, a polyamide film having blended therein polyvinylpyrrolidone having such a property is found to be extremely poor in terms of yellow index and sometimes significantly impairs the commercial value. Also, when this film is treated with water or oil, the hydrophilic compound readily drops off from the film and the elution resistance of the film is inferior.

Furthermore, a casing film for food, comprising a mixture of polyvinylpyrrolidone and a polyamide resin, is disclosed (see, Patent Document 2). In Examples of this document, a film obtained by blending crosslinked polyvinylpyrrolidone in a polyamide is proposed. This film has a matte texture and is imparted with a high-grade image, but there is a room for more improvement in the water vapor permeability, and when the blending amount of the crosslinked polyvinylpyrrolidone is increased to enhance the water vapor permeability or impart a high-grade feeling, clogging in the filter is very often generated and this raises a problem in continuous productivity.

In addition, a multilayer tubular film for transfer of liquid smoke to food, comprising crosslinked polyvinylpyrrolidone and a polyamide resin is disclosed (see, Patent Document 3). In this document, a multilayer tubular film having an innermost layer in which crosslinked polyvinylpyrrolidone and a polyamide resin are blended, is proposed. Since this multilayer tubular film uses crosslinked polyvinylpyrrolidone, the compound can hardly drop off from the film and good elution resistance is obtained, so that liquid smoke can be transferred to food. However, as disclosed in the Examples of the document, due to a polyolefin layer formed as a water vapor barrier layer, the smoking effect is insufficient, and there is a room for more improvement. Furthermore, also in this document, a laminate film capable of satisfying all of film appearance, elution resistance, slipperiness, water vapor permeability and smoking treatment effect in a high level is technically neither suggested nor disclosed.

RELATED ART

PATENT DOCUMENT

Patent Document 1: U.S. Patent No. 7,361,392
Patent Document 2: Japanese Unexamined Patent Publication (Kokai) No. 2002-306059
Patent Document 3: Japanese Patent Application No. 2005-515501

SUMMARY OF THE INVENTION

PROBLEMS TO BE SOLVED BY THE INVENTION

A first object of the present invention is to provide a polyamide resin composition for film, ensuring that the film has a matte texture, good film appearance with very little yellow tint, large water vapor permeability and excellent smoking treatment effect and that a problems such as clogging of a filter can be reduced and continuous productivity is excellent, and a film comprising the same.

A second object of the present invention is to provide a polyamide-based laminate film having a good film appearance with little yellow tint and a large water vapor permeability and being excellent in the smoking treatment effect, elution resistance and slipperiness.

MEANS TO SOLVE THE PROBLEMS

Under these circumstances, the present inventors have made continuous and intensive studies, and as a result found that the first object above can be attained by a polyamide composition for a film, in which a polyamide resin, a vinyl amide-based polymer and a crosslinked poly(N-vinyl lactam) having a specific average diameter are blended in a specific ratio, and a film comprising the same. The present invention in a first aspect is accomplished based on this finding.

That is, the present invention in the first aspect relates to [1] a polyamide resin composition for a film, comprising (A) a polyamide, (B) a vinyl amide-based polymer and (C) a crosslinked poly(N-vinyl lactam) having an average particle diameter of 10 to 70 $\mu$m, with the blending ratio thereof being such that the blending ratio between the polyamide resin (A) and the total amount of the vinyl amide-based polymer (B) and the crosslinked poly(N-vinyl lactam) (C) is (A): ((B)+(C)) = from 70:30 to 98:2 mass% and the blending ratio between the vinyl amide-based polymer (B) and the crosslinked poly(N-vinyl lactam) (C) is (B)/(C) = from 80/20 to 20/80 (by mass).

Preferred embodiments of the polyamide resin composition for a film, which is the first aspect of the present invention, and a film comprising the same are set forth below. A plurality of preferred embodiments may be combined.

[2] The polyamide resin composition for a film, wherein the vinyl amide-based polymer (B) is a poly(N-vinyl-2-pyrrolidone) and the crosslinked poly(N-vinyl lactam) (C) is a crosslinked poly(N-vinyl-2-pyrrolidone).
[3] The polyamide resin composition for a film, wherein the polyamide resin (A) is a homopolymer or copolymer comprising, as a constituent unit, at least one unit selected from the group consisting of a caprolactam unit, a hexamethylene adipamide unit and a dodecane lactam unit.
[4] The polyamide resin composition for a film, wherein the polyamide resin (A) is any one selected from the group consisting of a polyamide 6 polymer, a polyamide 6/66 copolymer, a polyamide 6/12 copolymer and a polyamide 6/66/12 copolymer.
[5] A polyamide film comprising the above-described polyamide resin composition for a film.
[6] A biaxially-stretched polyamide film comprising the above-described polyamide resin composition for film.
[7] A smoking casing film comprising the above-described polyamide resin composition for a film.
[8] The film, wherein the water vapor permeability measured at 40°C and 90% RH is 1,000 $g/m^2$•day or more, the yellow index (YI) is 20 or less, and the glossiness (gloss value) is 70% or less.
[9] A packaged smoked food obtained by packaging a smoked food in the above-described film.

The present inventors have further continued intensive studies and, as a result, it has been found that the above-described objects can be attained by a polyamide-based laminate film having a layer composed of a polyamide resin and a specific vinyl amide-based polymer, and a layer composed of a polyamide resin and a crosslinked poly(N-vinyl lactam). The present invention in a second aspect has been accomplished based on this finding.

That is, the present invention in the second aspect provides [10] a polyamide-based laminate film comprising at least two or more layers having a layer (a) formed of (A1) a polyamide resin composition containing from 80 to 98

mass% of (A) a polyamide resin and from 2 to 20 mass% of (B) a vinyl amide-based polymer and a layer (b) formed of (A2) a polyamide resin composition containing from 70 to 98 mass% of (A) a polyamide resin and from 2 to 30 mass% of (C) a crosslinked poly(N-vinyl lactam), wherein the layer (b) formed of the polyamide resin composition (A2) is disposed as an exposed surface layer and the layer (a) formed of the polyamide resin composition (A1) is disposed on the side opposite the exposed surface with respect to the layer (b).

Preferred embodiments of the polyamide-based laminate film, which is the second aspect of the present invention, are set forth below. A plurality of preferred embodiments may be combined.

[11] The polyamide-based laminate film, wherein the polyamide resin (A) is any one selected from the group consisting of a polyamide 6 polymer, a polyamide 6/66 copolymer, a polyamide 6/12 copolymer and a polyamide 6/66/12 copolymer.

[12] The polyamide-based laminate film, wherein the vinyl amide-based polymer (B) is a poly(N-vinyl-2-pyrrolidone) and the crosslinked poly(N-vinyl lactam) (C) is a crosslinked poly(N-vinyl-2-pyrrolidone).

[13] The polyamide-based laminate film, wherein the polyamide resin (A) constituting the polyamide resin composition (A2) is a polyamide 6 polymer.

[14] The polyamide-based laminate film, comprising from 2 to 7 layers.

[15] The polyamide-based laminate film, which is a polyamide-based laminate biaxially-stretched film stretched 2.0 times or more in each of the vertical and transverse directions.

[16] The polyamide-based laminate film, which is used as a film for transfer of liquid smoke to food.

[17] A packaged smoked food obtained by packaging a smoked food in the film described in any one of claims 10 to 16, wherein the layer (b) formed of the polyamide resin composition (A2) is disposed as an innermost layer coming into contact with a food and the layer (a) formed of the polyamide resin composition (A1) is disposed on the outer side with respect to the layer (b).

## EFFECTS OF THE INVENTION

The polyamide resin composition for film in the first aspect of the present invention comprises a vinyl amide-based polymer and a crosslinked poly(N-vinyl lactam) having a specific average particle diameter, in specific blending amounts and a specific ratio and, therefore, is **characterized in that** the film has a matte texture, good film appearance with very little yellow tint, large water vapor permeability and excellent smoking treatment effect, a problems such as clogging of a filter can be reduced, and continuous productivity is excellent.

The above film allows easy permeation of water content containing a smoke flavor and a seasoning ingredient and is suitable for a smoking treatment and on the other hand, this film is appropriately impermeable to gas, has strength sufficiently high to withstand the casing processing such as clipping, stirring and filling of the contents, and therefore, is suitable as a smoking casing film.

The polyamide-based laminate film in the second aspect of the present invention is a laminate film comprising at least two or more layers having a layer formed of (A1) a polyamide resin composition composed of a polyamide resin and a vinyl amide-based polymer and a layer formed of (A2) a polyamide resin composition composed of a polyamide resin and a crosslinked poly(N-vinyl lactam), wherein the layer (b) formed of the polyamide resin composition (A2) is disposed as an exposed surface layer and the layer (a) formed of the polyamide resin composition (A1) is disposed on the side opposite the food with respect to the layer (b). As a result, the film has good film appearance with little yellow tint and large water vapor permeability and is excellent in smoking treatment effect, elution resistance and slipperiness, thus satisfying all of the film appearance, water vapor permeability and smoking treatment effect at a high level. This laminate film allows easy permeation of moisture containing smoke flavor and a seasoning ingredient and is suitable for smoking treatment and on the other hand, this film is impermeable to gas, has strength sufficiently high to withstand the processing of the casing, such as clipping, stirring and stuffing, and therefore, is suited as a film for transfer of liquid smoke to food.

## BRIEF DESCRIPTION OF THE DRAWINGS

Fig. 1 is a perspective view and a cross-sectional view showing an example of the film of the present invention used for packaging a smoked food.

Fig. 2 is a perspective view showing an example of a smoked food packaged in the multilayer film of the present invention.

MODE FOR CARRYING OUT THE INVENTION

The present invention is described in detail below.
The first aspect of the present invention is described below.
The polyamide resin composition in the first aspect of the present invention is composed of (A) a polyamide resin, (B) a vinyl amide-based polymer and (C) a crosslinked poly(N-vinyl lactam) having an average particle diameter of 10 to 70 μm, and the blending ratio thereof is such that the blending ratio between the polyamide resin (A) and the total amount of the vinyl amide-based polymer (B) and the crosslinked poly(N-vinyl lactam) (C) is (A):((B)+(C)) = from 70:30 to 98:2 mass% and the blending ratio between the vinyl amide-based polymer (B) and the crosslinked poly(N-vinyl lactam) (C) is (B)/(C) = from 80/20 to 20/80 (by mass).

The polyamide resin (A) has an amide bond (-CONH-) in the main chain and is obtained using, as a raw material, a lactam, an aminocarboxylic acid, or a nylon salt composed of a diamine and a dicarboxylic acid, by condensation polymerizing or condensation copolymerizing it by a known method such as melt polymerization, solution polymerization or solid-phase polymerization.

Examples of the lactam include caprolactam, enatholactam, undecanolactam, dodecanolactam, α-pyrrolidone and α-piperidone, and examples of the aminocarboxylic acid include 6-aminocaproic acid, 7-aminoheptanoic acid, 9-aminononanoic acid, 11-aminoundecanoic acid and 12-aminododecanoic acid. One of these or two or more thereof may be used.

Examples of the diamine constituting the nylon salt include an aliphatic diamine such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecamethylenediamine, tetradecamethylenediamine, pentadecamethylenediamine, hexadecamethylenediamine, heptadecamethylenediamine, octadecamethylenediamine, nonadecamethylenediamine, eicosamethylenediamine, 2-/3-methyl-1,5-pentanediamine, 2-methyl-1,8-octanediamine, 2,2,4-/2,4,4-trimethylhexamethylenediamine and 5-methyl-1,9-nonanediamine; an alicyclic diamine such as 1,3-/1,4-cyclohexanediamine, 1,3-/1,4-cyclohexanedimethylamine, bis(4-aminocyclohexyl)methane, bis(4-aminocyclohexyl)propane, bis(3-methyl-4-aminocyclohexyl)methane, bis(3-methyl-4-aminocyclohexyl)propane, 5-amino-2,2,4-trimethyl-l-cyclopentanemethylamine, 5-amino-1,3,3-trimethylcyclohexanemethylamine (isophoronediamine), bis(aminopropyl)piperazine, bis(aminoethyl)piperazine, norbornanedimethylamine and tricyclodecanedimethylamine; and an aromatic diamine such as m-/p-xylylenediamine. One of these or two or more thereof may be used.

Examples of the dicarboxylic acid constituting the nylon salt include an aliphatic dicarboxylic acid such as adipic acid, pimelic acid, suberic acid, azelaic acid, sebacic acid, undecanedicarboxylic acid, dodecanedicarboxylic acid, tridecanedicarboxylic acid, tetradecanedicarboxylic acid, pentadecanedicarboxylic acid, hexadecanedicarboxylic acid, octadecanedicarboxylic acid and eicosanedicarboxylic acid; an alicyclic dicarboxylic acid such as 1,3-/1,4-cyclohexanedicarboxylic acid, dicyclohexanemethane-4,4'-dicarboxylic acid and norbornanedicarboxylic acid; and an aromatic dicarboxylic acid such as isophthalic acid, terephthalic acid and 1,4-/2,6-/2,7-naphthalenedicarboxylic acid. One of these or two or more thereof may be used.

In the polyamide resin (A), a homopolymer or a copolymer derived from such a lactam, an aminocarboxylic acid or a nylon salt composed of a diamine and a dicarboxylic acid may be used alone, or a mixture thereof may be used. Specific examples of the polyamide resin (A) used include polycaprolactam (polyamide 6), polyundecanolactam (polyamide 11), polydodecanolactam (polyamide 12), polyethylene adipamide (polyamide 26), polytetramethylene adipamide (polyamide 46), polyhexamethylene adipamide (polyamide 66), polyhexamethylene azelamide (polyamide 69), polyhexamethylene sebacamide (polyamide 610), polyhexamethylene undecamide (polyamide 611), polyhexamethylene dodecamide (polyamide 612), polyhexamethylene terephthalamide (polyamide 6T), polyhexamethylene isophthalamide (polyamide 6I), polyhexamethylene hexahydroterephthalamide (polyamide 6T(H)), polynonamethylene adipamide (polyamide 96), polynonamethylene azelamide (polyamide 99), polynonamethylene sebacamide (polyamide 910), polynonamethylene dodecamide (polyamide 912), polynonamethylene terephthalamide (polyamide 9T), polytrimethylhexamethylene terephthalamide (polyamide TMHT), polynonamethylene hexahydroterephthalamide (polyamide 9T(H)), polynonamethylene naphthalamide (polyamide 9N), polydecamethylene adipamide (polyamide 106), polydecamethylene azelamide (polyamide 109), polydecamethylene decamide (polyamide 1010), polydecamethylene dodecamide (polyamide 1012), polydecamethylene terephthalamide (polyamide 10T), polydecamethylene hexahydroterephthalamide (polyamide 10T(H)), polydecamethylene naphthalamide (polyamide 10N), polydodecamethylene adipamide (polyamide 126), polydodecamethylene azelamide (polyamide 129), polydodecamethylene sebacamide (polyamide 1210), polydodecamethylene dodecamide (polyamide 1212), polydodecamethylene terephthalamide (polyamide 12T), polydodecamethylene hexahydroterephthalamide (polyamide 12T(H)), polydodecamethylene naphthalamide (polyamide 12N), polymetaxylylene adipamide (polyamide MXD6), polymetaxylylene suberamide (polyamide MXD8), polymetaxylylene azelamide (polyamide MXD9), polymetaxylylene sebacamide (polyamide MXD10), polymetaxylylene dodecamide (polyamide MXD12), polymetaxylylene terephthalamide (polyamide MXDT), polymetaxylylene isophthalamide (polyamide MXDI), polymetaxylylene naphthalamide (polyamide MXDN), polybis(4-aminocyclohexyl)methane dodecamide (polyamide PACM12), polybis(4-aminocyclohexyl)methane terephthalamide (polyamide PACMT), polybis(4-aminocyclohexyl)methane isophthalamide (polyamide PACMI), polybis(3-methyl-4-aminocyclohexyl)methane dodecamide (polyamidedimethyl PACM12), polyisophorone adipamide (polyamide IPD6), polyisophorone terephthalamide (polyamide IPDT), and a polyamide copolymer using such a raw material monomer. One of these or two or more thereof may be used. In view of heat resistance, mechanical strength and transparency of the film obtained, profitability, easy availability and the like, the polyamide resin is preferably polyamide 6, polyamide 12, polyamide 66, a polyamide 6/66 copolymer (a copolymer of polyamide 6 and polyamide 66; hereinafter, the copolymer is denoted in the same manner), a polyamide 6/69 copolymer, a polyamide 6/610 copolymer, a polyamide 6/611 copolymer, a polyamide 6/612 copolymer, a polyamide 6/12 copolymer, a polyamide 6/66/12 copolymer, a polyamide 6/6T copolymer, a polyamide 6/6I copolymer, a polyamide 6/IPD6 copolymer, a polyamide 6/IPDT copolymer, a polyamide 66/6T copolymer, a polyamide 66/6I copolymer, a polyamide 6T/6I copolymer, a polyamide 66/6T/6I copolymer, or polyamide MXD6, more preferably polyamide 6, polyamide 12, polyamide 66, a polyamide 6/66 copolymer, a polyamide 6/12 copolymer, a polyamide 6/IPD6 copolymer, a polyamide 6/IPDT copolymer, or a polyamide 6/66/12 copolymer, still more preferably polyamide 6, a polyamide 6/66 copolymer, a polyamide 6/12 copolymer, or a polyamide 6/66/12 copolymer.

The relative viscosity of the polyamide resin (A) as measured in accordance with JIS K-6920 is preferably from 2.0 to 5.0, more preferably from 2.5 to 4.5. If the relative viscosity of the polyamide resin (A) is less than the value above, the mechanical property of the obtained polyamide film is sometimes reduced, whereas if it exceeds the value above, the viscosity at melting becomes high in some cases, making film formation difficult.

Incidentally, the polyamide resin (A) is not particularly limited in the kind of the terminal group and its concentration or molecular weight distribution. In order to adjust the molecular weight or stabilize the melt during the shaping, one of a monoamine, a diamine, a monocarboxylic acid and a dicarboxylic acid may be added or two or more thereof may be added in appropriate combination. Examples thereof include an aliphatic monoamine such as methylamine, ethylamine, propylamine, butylamine, hexylamine, octylamine, decylamine, stearylamine, dimethylamine, diethylamine, dipropylamine and dibutylamine; an alicyclic monoamine such as cyclohexylamine and dicyclohexylamine; an aromatic monoamine such as aniline, toluidine, diphenylamine and naphthylamine; an aliphatic diamine such as hexamethylenediamine, nonanemethylenediamine, decamethylenediamine and dodecamethylenediamine; an alicyclic diamine such as cyclohexanediamine, methylcyclohexanediamine and isophoronediamine; an aromatic diamine such as m-/p-phenylenediamine and m-/p-metaxylylenediamine; an aliphatic monocarboxylic acid such as acetic acid, propionic acid, butyric acid, valeric acid, caproic acid, caprylic acid, lauric acid, tridecylic acid, myristic acid, palmitic acid, stearic acid, pivalic acid and isobutyric acid; an alicyclic monocarboxylic acid such as cyclohexanecarboxylic acid; an aromatic monocarboxylic acid such as benzoic acid, toluic acid, α-/β-naphthalenecarboxylic acid, methylnaphthalenecarboxylic acid and phenylacetic acid; an aliphatic dicarboxylic acid such as adipic acid, trimethyladipic acid, pimelic acid, suberic acid, azelaic acid, sebacic acid, undecanedicarboxylic acid and dodecanedicarboxylic acid; an alicyclic dicarboxylic acid such as 1,3-cyclopentanedicarboxylic acid and 1,3-/1,4-cyclohexanedicarboxylic acid; and an aromatic dicarboxylic acid such as terephthalic acid, isophthalic acid and 1,4-/2,6-/2,7-naphthalenedicarboxylic acid. One of these or two or more thereof may be used. The amount used of such a molecular weight adjusting agent varies depending on the reactivity of the molecular weight adjusting agent or the polymerization conditions but may be appropriately determined such that the relative viscosity of the polyamide resin finally obtained falls in the range above.

Furthermore, with respect to the polyamide resin (A), the water extraction amount measured in accordance with the measuring method of the content of a low molecular weight material prescribed in JIS K-6920 is preferably 1.0% or less, more preferably 0.5% or less. If the water extraction amount is large, aggressive attachment of an oligomer component to the vicinity of a die occurs and a die line or a fish eye generated due to the attached matter is sometimes liable to cause an appearance failure. Moreover, the polyamide resin (A) is high in the hygroscopicity as compared with an olefin resin and when a moisture-absorbed polyamide resin is used, hydrolysis occurs at the time of melt-extruding the raw material, which allows the generation of oligomers and in turn, makes it difficult to produce a film. Therefore, the polyamide resin is preferably dried in advance to adjust the percentage of water content to 0.1 mass% or less.

The vinyl amide-based polymer (B) in the first aspect of the present invention is a polymer containing a structural unit represented by the following formula (1):

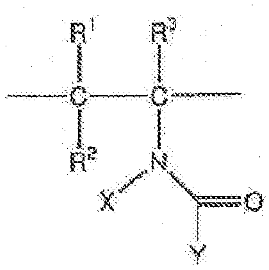

(1)

(wherein each of $R^1$, $R^2$ and $R^3$ independently represents a hydrogen atom or an alkyl group, and each of X and Y independently represents a hydrogen atom or an organic residue, provided that a vinyl amide where X and Y are combined to form a heterocyclic structure containing the nitrogen is also included).

In formula (1), each of $R^1$, $R^2$ and $R^3$ independently represents a hydrogen atom or an alkyl group. Specific examples of the alkyl group as an example of $R^1$, $R^2$ and $R^3$ are not particularly limited but, for example, an alkyl group having a carbon number of 1 to 4, such as methyl group, ethyl group, n-propyl group, isopropyl group, n-butyl, isobutyl group and tert-butyl group is preferred. The alkyl group above may have a substituent such as halogen group, hydroxyl group, ester group, carboxylic acid group and sulfonic acid group, if desired. In formula (1), each of X and Y independently represents a hydrogen atom or an organic residue. Specific examples of the organic residue as an example of X and Y are not particularly limited but include, for example, a methyl group, an ethyl group and a phenyl group. Also, X and Y may combine to form a heterocyclic structure containing the nitrogen atom. The heterocyclic structure is not particularly limited, but examples thereof include a heterocyclic structure contained in cyclic N-vinyl amides. The organic residue may have a substituent such as halogen group, hydroxyl group, ester group, carboxylic acid group and sulfonic acid group, if desired. Among the hydrogen atom and organic residues above represented by X and Y, a hydrogen atom and a methyl group are preferred.

The structural unit represented by formula (1) is derived from an N-vinyl amide-based monomer. Specific examples of the N-vinyl amide-based monomer include N-vinylformamide, N-methyl-N-vinylformamide, N-vinylacetamide, N-methyl-N-vinylacetamide, N-vinylphthalamide, N-vinylsuccinic amide and N-vinylurea. Examples of the vinyl amide where X and Y are combined to form a heterocyclic structure containing the nitrogen atom include cyclic N-vinyl amides such as N-vinyl-2-pyrrolidone, N-vinyl-5-methyl-2-pyrrolidone, N-vinyl-2-piperidone, N-vinyl-6-methyl-2-piperidone, N-vinyl-E-caprolactam, N-vinyl-7-methyl-ε-caprolactam, N-vinyloxazolidone, N-vinylimidazole, N-vinyl-2-methylimidazole and N-vinyl-4-methylimidazole. One of these or two or more thereof may be used. Among these monomers, N-vinylformamide, N-vinylacetamide, N-vinylpyrrolidone, N-vinylcaprolactam and N-vinyloxazolidone are preferred in view of their easy availability and good polymerization reactivity.

The vinyl amide-based polymer (B) may be obtained by copolymerizing the N-vinyl amide-based structural unit represented by formula (1) and a structural unit derived from other monomers. The other monomer is not particularly limited as long as it is copolymerizable with the N-vinyl amide-based monomer represented by formula (1), but examples thereof include a monoethylene-based unsaturated carboxylic acid-based monomer such as acrylic acid, methacrylic acid, dimethylacrylic acid, ethacrylic acid, maleic acid, fumaric acid, itaconic acid, crotonic acid, methylmaleic acid, methylfumaric acid, mesaconic acid, citraconic acid and glutaconic acid, and a monomer containing a salt thereof (sodium salt, potassium salt, zinc salt, ammonium salt); a carboxylic acid ester-based monomer such as methyl acrylate, ethyl acrylate, (iso)propyl acrylate, butyl acrylate, 2-ethylhexyl acrylate, cyclohexyl acrylate, methyl methacrylate, ethyl methacrylate, (iso)propyl methacrylate, butyl methacrylate, 2-ethylhexyl methacrylate, cyclohexyl methacrylate, 2-hydroxyethyl acrylate, 2-hydroxyethyl methacrylate, 2-hydroxypropyl acrylate, 2-hydroxypropyl methacrylate, methoxyethyl acrylate, methoxyethyl methacrylate, 2-hydroxyethoxyethyl acrylate and 2-hydroxyethoxyethyl methacrylate, and a monomer containing a salt thereof (sodium salt, potassium salt, zinc salt, ammonium salt); a dicarboxylic acid ester-based monomer such as monomethyl maleate, monomethyl fumarate, monomethyl itaconate, dimethyl maleate, diethyl fumarate and dimethyl itaconate; a sulfoxyl group-containing unsaturated monomer such as acrylic acid ethyl 2-sulfonate, methacrylic acid ethyl 2-sulfonate, vinylsulfonic acid, styrenesulfonic acid, (3-sulfopropyl) acrylate, (3-sulfopropyl) methacrylate and acrylamidomethylpropanesulfonic acid, and a salt thereof; a carboxylic acid amide-based monomer such as acrylamide, methacrylamide, N-methylacrylamide, N-methylmethacrylamide, N-ethylacrylamide, N-ethylmethacrylamide, N-isopropyl(meth)acrylamide, N-isopropylmethacrylamide, N-methylolacrylamide, N-methylolmethacrylamide, N, N'-dimethylacrylamide, N,N'-diethylacrylamide, N,N'-dimethylmethacrylamide, N,N'-diethylmethacrylamide, N,N'-dimethylolacrylamide, N-methoxymethylacrylamide, N-methoxymethylmethacrylamide, N-phenylacrylamide, 2-acrylamido-2-methylpropanesulfonic acid and 2-methacrylamido-2-methylpropanesulfonic acid; a basic unsaturated monomer such as N,N-dimethylaminoethyl acrylate, N,N-dimethylaminoethyl methacrylate, N,N-diethylaminoethyl acrylate, N,N-diethylaminoethyl methacrylate, N,N-dimethylaminopropyl acrylate, N,N-dimethylaminopropyl methacrylate, N,N-dibutylaminoethyl acrylate, N,N-dibutylaminoethyl methacrylate and vinylpyridine, and a salt or a quaternized product thereof; an unsaturated carboxylic acid anhydride such as maleic anhydride, itaconic anhydride, citraconic anhydride and endobicyclo-[2,2,1][2.2.1]-5-heptene-2,3-dicarboxylic anhydride; a vinyl ester-based monomer such as vinyl formate, vinyl acetate, vinyl propionate, vinyl valerate, vinyl butyrate, vinyl pivalate, vinyl caprate, vinyl laurate, vinyl decanoate, vinyl stearate, vinyl hexanoate, vinyl octanoate, vinyl palmitate and vinyl benzoate; a vinyl ether-based monomer such as methyl vinyl ether, ethyl vinyl ether, propyl vinyl ether, butyl vinyl ether and vinyl benzyl ether; an allyl-based monomer such as allyl acetate, allyl chloride, allyl alcohol, allylphenyl ether and allyl acetate; an $\alpha$-olefins such as ethylene, propylene, 1-butene, isobutene, 1-pentene, 4-methyl-1-pentene, 1-hexene, 1-octene, 1-decene and 1-dodecene; a styrene-based monomer such as styrene, o-/p-methylstyrene, p-methoxystyrene and m-chlorostyrene; vinyl halides such as vinyl chloride, vinylidene chloride, vinyl fluoride, vinylidene fluoride and vinyl bromide; vinyl cyanides such as acrylonitrile and methacrylonitrile; an unsaturated epoxy-based monomer such as glycidyl acrylate, glycidyl methacrylate, glycidyl ethacrylate, glycidyl itaconate, glycidyl citraconate and allyl glycidyl ether; and a vinyl carbonate-based monomer such as vinyl ethylene carbonate. One of these or two or more thereof may be used.

The content of the N-vinyl amide-based structural unit is not particularly limited but is preferably 50 mol% or more, more preferably 70 mol% or more, still more preferably 80 mol% or more, based on all structural units in the vinyl amide-based polymer (B). If the content of the N-vinyl amide-based structural unit is less than the value above, the hydrophobicity is excessively developed and the effects of the present invention may not be brought out.

As the polymerization method, a known polymerization method, for example, bulk polymerization, solution polymerization, suspension polymerization and emulsion polymerization, may be used, and this is not particularly limited. The polymerization temperature is not particularly limited but is preferably from 0 to 300°C, more preferably from 10 to 200°C, still more preferably from 25 to 150°C. If the polymerization temperature is less than the value above, the polymerization reactivity may be reduced and the polymerization reaction may proceed very slowly, whereas if it exceeds the value above, many side reactions may take place and the reaction may be hardly controlled.

The solvent in the polymerization reaction is not particularly limited, but examples thereof include aliphatic hydrocarbons such as hexane and octane; alicyclic saturated hydrocarbons such as cyclohexane; alicyclic unsaturated hydrocarbons such as cyclohexene; aromatic hydrocarbons such as benzene, toluene and xylene; ketones such as acetone, methyl ethyl ketone, methyl isobutyl ketone, 2-/3-hexanone, 2-/3-/4-heptanone, cyclopentanone and cyclohexanone; esters such as methyl acetate, ethyl acetate, butyl acetate and $\gamma$-butyrolactone; halogenated hydrocarbons such as dichloroethane, chloroform, carbon tetrachloride, hexachloroethane and chlorobenzene; ethers such as diethyl ether, diisopropyl ether, dioxane, dioxolane and tetrahydrofuran; alkylene glycol ethers such as ethylene glycol dimethyl ether, propylene glycol monomethyl ether acetate and ethylene glycol monomethyl ether acetate; lactones such as butyrolactone, valerolactone and caprolactone; alcohols such as methanol, ethanol, n-propyl alcohol, isopropyl alcohol, n-/s-/t-butanol, 1-/2-/3-pentanol, ethylene glycol, propylene glycol, 1,3-propanediol, diethylene glycol, triethylene glycol, ethylene glycol monoalkyl ether and propylene glycol monoalkyl ether; monoalkoxy alcohols such as methoxymethanol, 2-methoxyethanol, 2-methoxypropanol, 3-methoxypropanol, 2-methoxybutanol, 3-methoxybutanol, 4-methoxybutanol, 2-ethoxyethanol, 2-ethoxypropanol, 3-ethoxypropanol, 2-ethoxybutanol, 3-ethoxybutanol, 4-ethoxybutanol, 2-isopropoxyethanol, 2-isopropoxypropanol, 3-isopropoxypropanol, 2-isopropoxybutanol, 3-isopropoxybutanol, 4-isopropoxybutanol, 2-(n-propoxy)ethanol, 2-(n-propoxy)propanol, 3-(n-propoxy)propanol, 2-(n-propoxy)butanol, 3-(n-propoxy)butanol, 4-(n-propoxy)butanol, 2-(n-butoxy)ethanol, 2-(n-butoxy)propanol, 3-(n-butoxy)propanol, 2-(n-butoxy)butanol, 3-(n-butoxy)butanol, 4-(n-butoxy)butanol, 2-(s-butoxy)ethanol, 2-(s-butoxy)propanol, 3-(s-butoxy)propanol, 2-(s-butoxy)butanol, 3-(s-butoxy)butanol, 4-(s-butoxy)butanol, 2-(tert-butoxy)ethanol, 2-(tert-butoxy)propanol, 3-(tert-butoxy)propanol, 2-(tert-butoxy)butanol, 3-(tert-butoxy)butanol and 4-(tert-butoxy)butanol; amides such as dimethylformamide and N-methylpyrrolidone; amines such as butylamine, cyclohexylamine, pyridine, morpholine, 2-aminoethanol, diethanolamine, triethanolamine and aminoethylethanolamine; sulfonic acid esters such as dimethylsulfoxide; carbonic acid esters such as dimethyl carbonate and diethyl carbonate; alicyclic carbonic acid esters such as ethylene carbonate and propylene carbonate; and water. One of these or two or more thereof may be used.

Among these solvents, in view of easiness or the like of purification and recovery of the produced copolymer, a solvent selected from aromatic hydrocarbons, ketones, esters, ethers, alkylene glycol ethers, alcohols, amides, sulfonic acid esters, carbonic acid esters, alicyclic carbonic acid esters and water is preferred; a solvent selected from the group of polar solvents, i.e., ketones, esters, alkylene glycol ethers, alcohols, amides, sulfonic acid esters, carbonic acid esters, alicyclic carbonic acid esters and water, is more preferred; a solvent selected from ketones, esters, alkylene glycol ethers, alcohols, amides, alicyclic carbonic acid esters and water is still more preferred; and a solvent selected from alcohols and water is yet still more preferred.

At the time of performing the polymerization reaction, the concentration of all monomer components of the vinyl amide-based polymer (B) in the raw material mixture is not particularly limited, but the concentration of all monomer components of the vinyl amide-based polymer (B) is preferably from 1 to 99 mass%, more preferably from 10 to 90 mass%, still more preferably form 20 to 80 mass%. If the concentration of monomers is less than the value above, the productivity is sometimes low.

The polymerization reaction is usually performed by using a polymerization initiator. The polymerization initiator is not particularly limited, but examples thereof include ketone peroxides such as methyl ethyl ketone peroxide, cyclohexanone peroxide, 3,3,5-trimethylcyclohexanone peroxide, methylcyclohexanone peroxide, methyl acetoacetate peroxide and acetyl acetone peroxide; hydroperoxides such as tert-butyl hydroperoxide, cumene hydroperoxide, diisopropylbenzene hydroperoxide, 2,5-dimethylhexane-2,5-dihydroperoxide, 1,1,3,3-tetramethylbutyl hydroperoxide, 2-(4-methylcyclohexyl)-propane hydroperoxide; dialkyl peroxides such as di-tert-butyl peroxide, di-tert-butylcumyl peroxide, dicumyl peroxide, $\alpha,\alpha'$-bis(tert-butylperoxy) p-diisopropylbenzene, $\alpha,\alpha'$-bis(tert-butylperoxy) p-isopropylhexyne, 2,5-dimethyl-2,5-di(tert-butylperoxy)hexane, and 2,5-dimethyl-2,5-di(tert-butylperoxy)hexyne-3; peroxyesters such as tert-butyl peroxyacetate, tert-butyl peroxydiethylacetate, tert-butyl peroxyaurate, di-tert-butyl peroxyisophthalate, 2,5-dimethyl-2,5-di (benzoylperoxy)hexane, tert-butyl peroxyisobutylate, tert-butyl peroxypivarate, tert-butyl peroxyneodecanoate, 2,4,4-trimethylpentyl-2-peroxyneodecanoate, tert-butyl peroxy-2-ethylhexanonate, tert-butyl peroxy-3,5,5-trimethylcyclohexanoate, tert-butyl peroxybenzoate, tert-butyl peroxymaleic acid, tert-amyl peroxyneodecanoate, tert-amyl peroxypivalate, tert-amyl peroxy-2-ethylhexanoate, tert-amyl peroxynormaloctoate, tert-amyl peroxyacetate, tert-amyl peroxyisononanoate, tert-amyl peroxybenzoate, cumyl peroxyneohexanoate, cumyl peroxyoctoate, cumyl peroxyneodeanoate, tert-hexyl peroxypivalate, tert-hexyl peroxyneohexanoate, tert-butyl peroxyisopropylcarbonate and tert-butyl peroxy-2-ethylhexylcarbonate; peroxyketals such as n-butyl-4,4-bis(tert-butylperoxy)valerate, 2,2-bis(tert-butylperoxy)butane, 1,1-bis (tert-butylperoxy)-3,5,5-trimethylcyclohexane, 1,1-bis(tert-butylperoxy)cyclohexane and 2,2-bis(tert-butylperoxy)octane; diacyl peroxides such as acetyl peroxide, isobutyryl peroxide, octanoyl peroxide, decanoyl peroxide, lauroyl peroxide, 3,3,5-trimethylcyclohexanoyl peroxide, succinic acid peroxide, benzoyl peroxide, 2,4-dichlorobenzoyl peroxide, m-toluyl peroxide and dibenzoyl peroxide; peroxydicarbonates such as di-n-propyl peroxydicarbonate, di-isopropyl peroxydicarbonate, di-2-ethylhexyl peroxydicarbonate, di-tert-butyl peroxydicarbonate, tert-butyl peroxyisopropylcarbonate, tert-butyl peroxy-2-ethylhexylcarbonate, tert-amyl peroxyisopropylcarbonate, tert-amyl peroxy-2-ethylhexylcarbonate, bis-(4-tert-butylcyclohexyl) peroxydicarbonate, diacetyl peroxydicarbonate, dimyristyl peroxydicarbonate, dimethoxyisopropyl peroxydicarbonate, di(3-methyl-3-methoxybutyl) peroxydicarbonate and diallyl peroxydicarbonate; other organic peroxides such as acetylcyclohexylsulfonyl peroxide and tert-butyl peroxyallylcarbonate; and azo compounds such as 2,2'-azobisisobutyronitrile, 2,2'-azobis(2-methylbutyronitrile), dimethyl 2,2'-azobisisobutyrate, 2,2'-azobis(2-methylvaleronitrile), 2,2'-azobis(2,4-dimethylvaleronitrile), 2,2'-azobis(4-methoxy-2,4-dimethylvaleronitrile), 2,2'-azobis(2-methylpropionitrile), 2,2'-azobis(2-cyclopropylpropionitrile), 2,2'-azobis[2-(hydroxymethyl)propionitrile], 4,4'-azobis(4-cyanopentanoic acid), 1,1'-azobis(cyclohexane-1-carbonitrile), 1,1'-azobis-(cyclohexane-1-carbonitrile), 2,2'-azobis(2-methyl-N-2-propenylpropane-amide), 1-[(1-cyano-1-methyl)azolformamide, 2,2'-azobis(N-butyl-2-methylpropionamide), 2,2'-azobis(N-cyclohexyl-2-methylpropionamide), 2,2'-azobis[2-methyl-N-[1,1-bis(hydroxymethyl)-2-hydroxyethyl]propionamide], 2,2'-azobis[2-methyl-N-[2-hydroxyethyl]propionamide], 2,2'-azobis(2-methylpropionamidine) dihydrochloride, 2,2'-azobis(2-amidinopropane) dihydrochloride, 2,2'-azobis(N-N'-dimethyleneisobutylamidine) dihydrochloride, 2,2'-azobis[2-(2-imidazolin-2-yl)propane] dihydrochloride, 2,2'-azobis[2-(5-methyl-2-imidazolin-2-yl)propane] dihydrochloride, 2,2'-azobis[2-(3,4,5,6-tetrahydropyrimidin-2-yl)propane] dihydrochloride, 2,2'-azobis{2-[1-(2-hydroxyethyl)-2-imidazolin-2-yl]propane} dihydrochloride and 2,2'-azobis([N-(2-carboxyethyl)-2-methylpropionamidine]. One of these or two or more thereof may be used.

The amount of the polymerization initiator used, which varies depending on its kind or the polymerization method, may be appropriately determined so as to allow for swift progress of the polymerization reaction and obtain an appropriate polymerization degree and is not particularly limited, but the blending amount of the polymerization initiator is preferably from 0.001 to 10 parts by mass, more preferably from 0.01 to 5 parts by mass, still more preferably from 0.1 to 3 parts by mass, per 100 parts by mass of all monomer components of the vinyl amide-based polymer (B). If the blending amount of the polymerization initiator is less than the value above, the polymerization reaction may proceed very slowly, whereas if it exceeds the value above, for example, a side reaction may be increased.

In order to adjust the mass average molecular weight of the polymer, a molecular adjusting agent may be used at the polymerization reaction. Examples of the molecular adjusting agent include formaldehyde, acetaldehyde, propionaldehyde, butyraldehyde, isobutyraldehyde, formic acid, ammonium formate, hydroxylammonium sulfate, hydroxylammonium phosphate, dibutyl sulfide, dioctyl sulfide, diphenyl sulfide, diisopropyl disulfide, dibutyl disulfide, dihexyl disulfide, diacetyl disulfide, butylmercaptane, hexylmercaptane, dodecylmercaptane, tert-dodecylmercaptane, hydrogen sulfite, disulfite, ethyl thioglycolate, 2-amino-3-(tert-butyldithio)propionic acid, 3,3'-dithiobis(2-aminopropionic acid) (cystine), 2,2'-dithiobenzoic acid, 4,4'-dithiobenzoic acid, 3,3'-dithiodipropionic acid, 4,4'-dithiobisbutyric acid (3-carboxypropyl disulfide), 4,4'-dithiobis(2-aminobutyric acid), 4,4'-dithiobisphenylacetic acid, 2-mercaptoethanol, 1,3-mercaptopropanol, 3-mercaptopropane-1,2-diol, 1,4-mercaptobutanol, mercaptoacetic acid, ethyl-2-mercaptoacetate, 3-mercaptopropionic acid, mercaptosuccinic acid, thioglycerol, diethanol sulfide, thiodiglycol, ethylthioethanol, thiourea, dimethyl sulfoxide, allyl alcohol, allyl bromide, benzyl chloride, chloroform and tetrachloromethane. One of these or two or more thereof may be used.

The amount of the molecular weight adjusting agent used is appropriately selected such that the mass average molecular weight of the polymer falls in the later-described range, but the amount used is preferably from 0 to 10 parts

by mass per 100 parts by mass of all monomer components of the vinyl amide-based polymer (B). If the amount of the molecular weight adjusting agent used exceeds the value above, the polymerization reaction may not sufficiently proceed and the amount of residual monomers may be increased, as a result, a polymer whose mass average molecular weight does not reach 1,000 may be readily produced.

It is also possible to appropriately adjust the pH of the reaction solution during polymerization by adding a pH adjusting agent. The pH adjusting agent includes a basic substance such as ammonia, triethylamine, triethanolamine and sodium hydroxide solution, and an acidic substance such as hydrochloric acid, lactic acid, oxalic acid, acetic acid and formic acid.

Furthermore, a buffer chelating agent may be also used. Specific examples thereof include tetrasodium pyrophosphate, disodium ethylenediaminetetraacetate, trisodium phosphate, calcium hydroxide, borax, anhydrous disodium hydrogenphosphate-monosodium phosphate, and sodium carbonate-sodium bicarbonate. One of these or two or more thereof may be used. The amount of the buffer chelating agent used is not particularly limited but is preferably from 0.001 to 1.0 parts by mass, more preferably from 0.01 to 0.5 parts by mass, more preferably from 0.04 to 0.3 parts by mass, per 100 parts by mass of all monomer components of the vinyl amide-based polymer (B). The polymerization reaction is preferably performed in an inert gas atmosphere such as nitrogen and argon. The method for purifying the N-vinyl amide-based polymer produced by the polymerization reaction includes, for example, a method of removing the solvent by reprecipitation, dialysis, centrifugal separation, reduced-pressure drying, etc., but is not particularly limited.

The mass average molecular weight of the vinyl amide-based polymer (B) is preferably from 10,000 to 5,000,000, more preferably from 50,000 to 4,000,000, still more preferably from 100,000 to 3,000,000. If the mass molecular weight of the vinyl amide-based polymer (B) is less than the value above, the yellow index is high and a frosted texture in a matte finish or a high-quality texture may not be imparted to the film appearance, whereas if it exceeds the value above, the water vapor permeability or smoking effect of the film may be insufficient.

The vinyl amide-based polymer (B) is preferably a poly(N-vinyl-2-pyrrolidone) polymer and the K value of the polymer is preferably from 20 to 120, more preferably from 30 to 100. The K-value correlates to the molecular weight of the polyvinylpyrrolidone and is conventionally used for measuring the molecular weight of the polyvinylpyrrolidone. An aqueous solution of polyvinylpyrrolidone in a concentration of 1% is prepared, its relative viscosity is measured, and the value of k is determined according to the Fikentscher's formula:

$$\log Z = C[75k2/(1+1.5kC)+k]$$

wherein Z is the relative viscosity of an aqueous solution in a concentration of C, and C is the concentration of the aqueous solution in terms of the solution concentration. The obtained value of k is multiplied by 1,000, whereby the K-value is determined. The measurement is performed three times, and the average value thereof is used. The vinyl amide-based polymer (B) is not a crosslinked polymer.

The crosslinked poly(N-vinyl lactam) (C) has an average particle diameter of 10 to 70 μm and is a polymer obtained by further crosslinking a polymer composed of a structural unit derived from an N-vinyl lactam monomer. The N-vinyl lactam monomer used for the crosslinked polymer includes N-vinyl-2-pyrrolidone, N-vinyl-5-methyl-2-pyrrolidone, N-vinyl-2-piperidone, N-vinyl-6-methyl-2-piperidone, N-vinyl-ε-caprolactam and N-vinyl-7-methyl-ε-caprolactam. One of these or two or more thereof may be used.

Above all, a crosslinked poly(N-vinyl-2-pyrrolidone) is preferred. The crosslinked poly(N-vinyl-2-pyrrolidone) is sometimes referred to as a poly(N-vinyl)poly(2-pyrrolidone) polymer (PVPP), a crosslinked product of poly(N-vinyl-2-pyrrolidone), or an insoluble poly(N-vinyl-2-pyrrolidone), so as to distinguish it from poly(N-vinyl-2-pyrrolidone) (PVP).

The crosslinked poly(N-vinyl lactam) (C) may be obtained by copolymerizing the above-described N-vinyl lactam monomer and a structural unit derived from other monomers. The other monomer includes a vinyl ester such as vinyl acetate, a styrene, an acrylonitrile, an acrylamide, a methacrylamide, an acrylic acid, a methacrylic acid, an alkyl acrylate, an alkyl methacrylate, a hydroxy acrylate, a hydroxy methacrylate, an α-olefin such as 1-butene, 1-dodecene, 1-hexadecene, 1-eicosene and 1-triacontene, and a vinyl halide monomer such as vinyl chloride, vinyl fluoride, chloroprene and vinylidene chloride. One of these or two or more thereof may be used.

The crosslinked poly(N-vinyl lactam) (C) is a polymer crosslinked with a crosslinking agent. Examples of the crosslinking agent include alkylene bisacrylamides such as N,N'-methylene-bisacrylamide, N,N'-ethylene-bisacrylamide, N,N'-divinylethyleneurea, N,N'-divinylpropyleneurea, ethylidene-bis-3-(N-vinylpyrrolidone), N,N'-divinyldiimidazolyl-(2,2')butane and 1,1'-bis(3,3'-vinylbenzimidazolid-2-one)-1,4-butane; alkylene glycol di(meth)acrylates such as ethylene glycol diacrylate, ethylene glycol dimethacrylate, tetraethylene glycol acrylate, tetraethylene glycol dimethacrylate, diethylene glycol acrylate and diethylene glycol methacrylate; aromatic divinyl compounds such as divinylbenzene and divinyltoluene; triacrylic esters such as triallyl cyanurate and trimethylolpropane; 1-vinyl-3-ethylidene pyrrolidone,

butanediol diacrylate, vinyl acrylate, allyl acrylate, allyl methacrylate, divinyldioxane, and pentaerythritol triallyl ether. Among these, N,N'-divinylethyleneurea and divinylbenzene are preferred. One of these or two or more thereof may be used.

The amount of the crosslinking agent used at the production of the crosslinked poly(N-vinyl lactam) (C) is preferably from 0.01 to 50 parts by mass, more preferably from 0.1 to 20 parts by mass, per 100 parts by mass of all monomer components of the poly(N-vinyl lactam). If the amount of the crosslinking agent used is less than the value above, the strength as a crosslinked polymer may be reduced, whereas if it exceeds the value above, handling during polymerization may become difficult.

The method for obtaining the crosslinked poly(N-vinyl lactam) (C) includes, for example, radical polymerization using an azo-based or peroxide-based radical initiator, polymerization using UV rays, an electron beam or radiation, ion polymerization, and popcorn polymerization (proliferous *polymerization), and among these, popcorn polymerization (proliferous polymerization) is* preferred. *The popcorn polymerization (proliferous polymerization) is a method of crosslinking a vinyl lactam monomer together with a crosslinking agent and a solvent to obtain a crosslinked product described in Japanese Kokoku Nos.* 54-30027 *and* 3-39087 *and* Kokai Nos. 61-78808 *and* 61-78809*, or a method of treating a vinyl lactam monomer with an alkali compound such as alkali or alkaline earth metal hydroxide to obtain a crosslinked product described in* U.S. Patent Nos. 2,938,017*,* 3,277,066 *and* 3,759,880 *and Japanese Kokoku No.* 58-42201*. The outlines of both polymerization methods are descried in* Polymer Journal, Vol. 17, No. 1, pp. 143-152 (1985*).*

The crosslinked poly(N-vinyl lactam) (C) is preferably a crosslinked poly(N-vinyl-2-pyrrolidone) obtained by the popcorn polymerization method. The popcorn polymerization can be performed by a known method such as precipitation polymerization or bulk polymerization. The crosslinked poly(N-vinyl lactam) (C) is obtained in a powder form having an average particle diameter of 5 μm to 5 mm, but the average particle diameter of the crosslinked poly(N-vinyl lactam) (C) for use in the present invention is from 10 to 70 μm, preferably from 10 to 50 μm. If the average particle diameter exceeds the value above, fish eye gel is generated and impairs the film appearance and at the same time, continuous productivity may be reduced due to conspicuous clogging of an aggregate of the crosslinked poly(N-vinyl lactam) (C) in the filter. On the other hand, if the average particle diameter is less than the value above, the crosslinked poly(N-vinyl lactam) (C) is liable to aggregate and this rather generates fish eye gel. Also, even when the aggregation can be prevented, a film surface profile offering a high-quality finished matte appearance cannot be obtained. In the case where the particle diameter of the crosslinked poly(N-vinyl lactam) (C) is not in the range above, a pulverization treatment or classification is preferably performed in advance. In general, as the method for obtaining a fine particle by physical means, a fine particle is obtained by mechanically dry or wet pulverizing the existing crosslinked particle having a large particle size. Examples of the apparatus used for the pulverization include Ultraviscomill, bead mill, agitator mill, roller mill, hammer mill, ball mill, vibration mill, Autofall mill, jet mil or atomizer.

In the polyamide resin composition of the present invention, as for the blending ratio of the polyamide resin (A), the vinyl amide-based polymer (B) and the crosslinked poly(N-vinyl lactam) (C), the ratio between the polyamide resin (A) and the total amount of the vinyl amide-based polymer (B) and the crosslinked poly(N-vinyl lactam) (C) is (A): ((B)+(C)) = from 70:30 to 98:2 mass%, preferably from 7:25 to 97:3 mass%, more preferably from 80:20 to 95:5 mass%. If the blending amount of the vinyl amide-based polymer (B) and the crosslinked poly(N-vinyl lactam) (C) is less than the value above (2 mass%), not only a frosted texture in a matte finish or a high-quality texture cannot be imparted to the film appearance but also the hydrophilicity is lost to fail in bringing out the effects of the present invention, whereas if it exceeds the value above (30 mass%), the vinyl amide-based polymer (B) and the crosslinked poly(N-vinyl lactam) (C) tend to drop off by an operation such as treatment with water or oil.

Furthermore, considering the balanced performance of the entire film, such as matte appearance and water vapor permeability of the obtained film, the blending ratio between the vinyl amide-based polymer (B) and the crosslinked poly(N-vinyl lactam) (C) is (B)/(C) = from 80/20 to 20/80 (by mass), preferably from 70/30 to 30/70 (by mass, more preferably from 60/40 to 40/60 (by mass). If the blending ratio of the vinyl amide-based polymer (B) exceeds the value above, a frosted texture in a matte finish cannot be imparted and the yellow index (YI) is increased, giving a poor film appearance, whereas if it is less than the value above, the water vapor permeability of the film is reduced and at the same time, the continuous productivity at the film production is impaired.

As to the method for blending the vinyl amide-based polymer(B) or the crosslinked poly(N-vinyl lactam) (C) to the polyamide resin (A), various additives are blended, if desired, to the polyamide resin (A), the vinyl amide-based polymer (B) and the crosslinked poly(N-vinyl lactam) (C), and these are mixed by a known method, whereby the composition is produced. Examples of the method include a dry blending method of directly adding the raw materials at the shaping by using a tumbler or a mixer, a kneading method of previously melt-kneading the raw materials, in a concentration used at the shaping, by using a single-screw or twin-screw extruder Banbury mixer, a kneader, a mixing roll or the like, and a masterbatch method of previously kneading the raw materials in a high concentration by using a single-screw or twin-screw extruder, and diluting it before use at the shaping. The vinyl amide-based polymer (B) and the crosslinked poly(N-vinyl lactam) (C) may be added simultaneously or separately to the polyamide resin (A). Furthermore, the blending

method may differ between the vinyl amide-based polymer (B) and the crosslinked poly(N-vinyl lactam) (C). In the present invention, the production method is preferably performed by a kneading method of previously melt-kneading the raw materials or a masterbatch method, because entanglement of the vinyl amide-based polymer (B) and the crosslinked poly(N-vinyl lactam) (C) with the polyamide resin (A) can be intensified.

To the polyamide resin composition in the first aspect of the present invention, various additives and modifiers usually blended in the resin composition, such as heat stabilizer, ultraviolet absorber, light stabilizer, antioxidant, antistatic agent, lubricant, anti-blocking agent, filler, tackifier, sealing property improver, antifog agent, nucleating agent, release agent, plasticizer, crosslinking agent, blowing agent, colorant (e.g., pigment, dye) and flexural fatigue resistance improver, can be added within the range not impairing the properties of the film obtained.

Furthermore, from the standpoint of improving the transparency and slipperiness, a bisamide compound is preferably blended in the polyamide resin composition. Examples of the bisamide compound include N,N'-methylene bis-stearic acid amide, N,N'-ethylene bis-stearic acid amide, N,N'-ethylene bis-behenic acid amide, and N,N'-dioctadecyladipic acid amide. One of these or two or more thereof may be used.

The blending amount of the bisamide compound is preferably from 0.01 to 0.5 parts by mass, more preferably from 0.02 to 0.3 parts by mass, still more preferably from 0.03 to 0.2 parts by mass, per 100 parts by mass of the polyamide resin (A). If the blending amount is less than the value above, the effect of improving the transparency and slipperiness of the obtained film may be low, whereas if the blending amount exceeds the value above, printability of the film or adherence at the lamination processing is sometimes deteriorated.

Also, in the polyamide resin composition, in order to improve the stretchability or barrier property during the film production, a semiaromatic polyamide containing, in the molecular chain, 70 mol% or more of a polyamide structural unit derived from an amorphous polyamide having no crystallization temperature, a xylylenediamine selected from m-xylylenediamine and p-xylylenediamine, and an aliphatic dicarboxylic acid having a carbon number of 6 to 12, is preferably blended.

The amorphous polyamide indicates a polyamide giving an endothermic curve indistinguishable from the change of the base when measured using a differential scanning calorimeter, and showing no definite melting point. The amorphous polyamide includes, for example, a polyamide containing, as the main constituent unit, an aromatic aminocarboxylic acid such as paraaminomethylbenzoic acid, paraaminoethylbenzoic acid and metaaminomethylbenzoic acid, and a semiaromatic polyamide containing, as the main constituent, an aromatic dicarboxylic acid such as terephthalic acid and isophthalic acid and an aliphatic diamine, and it is preferred to blend a semiaromatic polyamide containing, as the polyamide constituent unit, an aliphatic diamine and a terephthalic acid and/or an isophthalic acid. As the aliphatic diamine unit used here, a 1,6-hexanediamine unit is preferably selected. The polyamide containing, as the polyamide constituent unit, an aliphatic diamine and a terephthalic acid and/or an isophthalic acid may be a polymer where the above-described polyamide structural unit accounts for 100 mass%, but may be a copolymer composed of a polyamide constituent unit introduced by other constituent units, for example, a lactam, an aminocarboxylic acid, a dicarboxylic acid except for terephthalic acid and isophthalic acid, and a diamine. In particular, the other copolymerizable constituent is preferably a hexamethylene adipamide unit, a caprolactam unit or a dodecanelactam unit.

Specific examples of the amorphous polyamide include a polyamide 6T/6I copolymer, a polyamide 6T/6I/66 copolymer, a polyamide 6T/6I/6 copolymer, a polyamide 6T/6 copolymer, a polyamide 6I/6 copolymer, a polyamide 6T/66 copolymer, a polyamide 6I/66 copolymer, a polyamide 6T/12 copolymer, a polyamide 6I/12 copolymer, and a polyamide 6T/6I/12 copolymer.

The semiaromatic polyamide containing, in the molecular chain, 70 mol% or more of a polyamide structural unit derived from a xylylenediamine selected from m-xylylenediamine and p-xylylenediamine and an aliphatic dicarboxylic acid having a carbon number of 6 to 12 is composed of a polyamide structural unit derived from a xylylenediamine selected from m-xylylenediamine and p-xylylenediamine and an aliphatic dicarboxylic acid having a carbon number of 6 to 12 and has an aromatic ring skeleton in the polyamide structural unit. In the semiaromatic polyamide, other polyamide structural units excluding the above-described polyamide structural unit may be also copolymerized.

Other polyamide structural units include a diamine unit except for a unit derived from a xylylenediamine, a dicarboxylic acid unit except for a unit derived from an aliphatic dicarboxylic acid having a carbon number of 6 to 12, and other units.

The diamine unit except for a unit derived from a xylylenediamine includes a unit composed of an aliphatic diamine such as hexamethylenediamine, octamethylenediamine, nonamethylenediamine, decamethylenediamine, dodecamethylenediamine, 2-/3-methyl-1,5-pentanediamine, 2-methyl-1,8-octanediamine, 2,2,4-/2,4,4-trimethylhexamethylenediamine and 5-methyl-1,9-nonanediamine; a unit composed of an alicyclic diamine such as bis(4-aminocyclohexyl)propane, bis(3-methyl-4-aminocyclohexyl)methane, bis(3-methyl-4-aminocyclohexyl)propane, 5-amino-2,2,4-trimethyl-1-cyclopentanemethylamine, 5-amino-1,3,3-trimethylcyclohexanemethylamine (isophoronediamine), bis(aminopropyl)piperazine, bis(aminoethyl)piperazine, norbornanedimethylamine and tricyclodecanedimethylamine; and a unit composed of an aromatic diamine such as p-bis-(2-aminoethyl)benzene. One of these or two or more thereof may be used.

The dicarboxylic acid unit except for a unit derived from an aliphatic dicarboxylic acid having a carbon number

of 6 to 12 include a unit composed of an aliphatic dicarboxylic acid such as malonic acid, succinic acid, glutaric acid, tridecanedicarboxylic acid, octadecanedicarboxylic acid and eicosanedicarboxylic acid; a unit composed of an alicyclic dicarboxylic acid such as 1,4-cyclohexanedicarboxylic acid; and a unit composed of an aromatic dicarboxylic acid such as terephthalic acid and isophthalic acid. One of these or two or more thereof may be used. Other units include a unit composed of an aminocarboxylic acid such as lactam (e.g., caprolactam, dodecanelactam), aliphatic aminocarboxylic acid (e.g., 11-aminoundecanoic acid, 12-aminododecanoic acid) and aromatic aminocarboxylic acid (e.g., p-aminomethylbenzoic acid). One of these or two or more thereof may be used.

Specific examples of the semiaromatic polyamide include a homopolymer such as polymetaxylylene adipamide (polyamide MXD6), polymetaxylylene pimelamide (polyamide MXD7), polymetaxylylene suberamide (polyamide MXD8), polymetaxylylene azelamide (polyamide MXD9), polymetaxylylene sebacamide (polyamide MXD10), polymetaxylylene dodecamide (polyamide MXD12), polyparaxylylene adipamide (polyamide PXD6) and polyparaxylylene azelamide (polyamide PXD9), and a copolymer such as metaxylylene/paraxylylene adipamide copolymer, metaxylylene/paraxylylene pipelamide copolymer, metaxylylene/paraxylylene suberamide copolymer, metaxylylene/paraxylylene azelamide copolymer, metaxylylene/paraxylylene sebacamide copolymer and metaxylylene/paraxylylene dodecamide copolymer.

The blending amount of the semiaromatic polyamide containing, in the molecular chain, 70 mol% or more of a polyamide structural unit derived from an amorphous polyamide having no crystallization temperature, a xylylenediamine selected from m-xylylenediamine and p-xylylenediamine, and an aliphatic dicarboxylic acid having a carbon number of 6 to 12 is preferably from 1 to 30 parts by mass, more preferably from 3 to 25 parts by mass, still more preferably from 5 to 20 parts by mass, per 100 parts by mass of the polyamide resin (A). If the blending amount is less than the value above, the effect of improving the stretchability or barrier property may be small, whereas if it exceeds the value above, production of a film is sometimes difficult due to high melt viscosity.

In the first aspect of the present invention, a film is produced using a polyamide resin composition comprising the polyamide resin (A), the vinyl amide-based polymer (B) and the crosslinked poly(N-vinyl lactam) (C) (hereinafter sometimes referred to as a "raw material polyamide resin composition), by applying a known film production method, whereby a polyamide film is obtained. Examples of the method therefor include a casting method where the raw material polyamide resin composition is melt-kneaded by an extruder, extruded into a flat film shape from a T-die or coat hanger die, cast on a casting roll surface and then cooled to produce a film, and a tubular method where a tubular material obtained by melt-extruding the composition into a tubular shape from a ring die is cooled with air or water to produce a film. The produced film can be used as a substantially unoriented unstretched film, but in view of strength and gas barrier property of the obtained film, a biaxially stretched film is preferred.

The unstretched film obtained can be stretched by a conventionally known industrial method. Examples of the method for a film produced by the casting method include a simultaneous biaxial stretching method where the unstretched sheet is stretched in the vertical and transverse directions (machine and transverse directions) at the same time by a tenter-type simultaneous biaxial stretching machine, and a sequential biaxial stretching method where the unstretched film melt-extruded from a T-die is stretched in the vertical direction by a roll-type stretching machine and then stretched in the transverse direction by a tenter-type stretching machine, and examples of the method for a tubular sheet shaped using an annular die include a tubular stretching method of stretching the tubular sheet in the vertical and transverse directions (machine and transverse directions) at the same time by inflation under a gas pressure. The stretching step may be performed continuously subsequently to the production of the polyamide film, or the stretching may be performed as a separate step after once taking up the polyamide film.

The stretch ratio of the stretched film varies depending on the use and application, but in the tenter-type biaxial stretching method and the tubular method, usually, the stretch ratio in both the vertical direction and the transverse direction is preferably from 1.5 to 4.5 times, more preferably from 2.5 to 4.0 times. The stretching temperature is preferably from 30 to 210°C, more preferably from 50 to 200°C.

The film stretched by the method above may be subsequently subjected to a heat treatment. Thanks to the heat treatment, dimensional stability at ordinary temperature can be imparted. In this case, the heat treatment temperature is selected from the range where the lower limit is 110°C and the upper limit is a temperature 5°C lower than the melting point of the resin composition. Within this range, a stretched film exhibiting good dimensional stability at ordinary temperature and having an arbitrary heat shrinkage percentage can be obtained. The adequately heat-set stretched film can be cooled and taken up in the usual manner.

Furthermore, in order to enhance the printability, lamination or applicability of a pressure-sensitive adhesive, the polyamide film obtained may be subjected to a surface treatment such as corona discharge treatment, plasma treatment, flame treatment and acid treatment. The polyamide film after such a treatment can be used in respective end uses through, if desired, a secondary processing step such as printing, lamination, coating of a pressure-sensitive adhesive, and heat sealing. The polyamide film is preferably subjected to a corona treatment so as to improve the adherence to processed meats or the like as an encased material.

The polyamide film obtained has a matte texture, a good appearance with little yellow tint, a large water vapor permeability and an excellent smoking treatment effect and has a high utility value by itself, but when other thermoplastic

resins are stacked thereon, many properties can be further added. Specifically, the polyamide film can be also used as a laminate film by stacking a thermoplastic resin layer on at least one surface thereof.

In producing the laminate film, another base material is stacked on one surface or both surfaces of the layer composed of the raw material polyamide resin composition, and examples of the stacking method include a co-extrusion method, an extrusion-lamination method and a dry lamination method. The co-extrusion method is a method of co-extruding the raw material polyamide resin composition and another thermoplastic resin, and examples thereof include co-extrusion sheet molding, co-extrusion casting film molding and co-extrusion inflation film molding. The extrusion-lamination method is a method where an anchor coat agent is coated on each of the polyamide film and a base material such as thermoplastic resin and dried and the thermoplastic resin or the like is melt-extruded while cooling it between rolls and pressure-contacted with the film by applying a pressure to obtain a laminate film. The dry lamination method is a method where a known adhesive such as organic titanium compound, isocyanate compound, polyester-based compound and polyurethane compound is coated on the polyamide film and after drying, laminated together with a base material such as thermoplastic resin to obtain a laminate film. The film after lamination can be increased in the adhesive strength by aging the film. In performing lamination, the polyamide film is preferably used after subjecting one surface or both surfaces thereof to a corona treatment.

Examples of the thermoplastic resin stacked include a polyolefin-based resin such as high-density polyethylene (HDPE), medium-density polyethylene (MDPE), low-density polyethylene (LDPE), linear low-density polyethylene (LLDPE), ultrahigh molecular weight polyethylene (UHMWPE), polypropylene (PP), ethylene/propylene copolymer (EPR), ethylene/butene copolymer (EBR), ethylene/vinyl acetate copolymer (EVA), ethylene/vinyl acetate copolymer saponified product (EVOH), ethylene/acrylic acid copolymer (EAA), ethylene/methacrylic acid copolymer (EMAA), ethylene/methyl acrylate copolymer (EMA), ethylene/methyl methacrylate copolymer (EMMA) and ethylene/ethyl acrylate copolymer (EEA); the above-described polyolefin-based resin modified with a compound containing a functional group, for example, a carboxyl group such as acrylic acid, methacrylic acid, maleic acid, fumaric acid, itaconic acid, crotonic acid, mesaconic acid, citraconic acid, glutaconic acid, cis-4-cyclohexene- 1,2-dicarboxylic acid and endobicyclo-[2.2.1]-5-heptene-2,3-dicarboxylic acid, a metal salt thereof (Na, Zn, K, Ca, Mg), an acid anhydride group such as maleic anhydride, itaconic anhydride, citraconic anhydride and endobicyclo-[2.2.1]-5-heptene-2,3-dicarboxylic anhydride, or an epoxy group such as glycidyl acrylate, glycidyl methacrylate, glycidyl ethacrylate, glycidyl itaconate and glycidyl citraconate; a polyester-based resin such as polybutylene terephthalate (PBT), polyethylene terephthalate (PET), polyethylene isophthalate (PEI), PET/PEI copolymer, polyarylate (PAR), polybutylene naphthalate (PBN), polyethylene naphthalate (PEN) and liquid crystal polyester (LCP); a polyether-based resin such as polyacetal (POM) and polyphenylene oxide (PPO); a polysulfone-based resin such as polysulfone (PSF) and polyethersulfone (PES); a polythioether-based resin such as polyphenylene sulfide (PPS) and polythioether sulfone (PTES); a polyketone-based resin such as polyether ether ketone (PEEK) and polyallyl ether ketone (PAEK); a polynitrile-based resin such as polyacrylonitrile (PAN), polymethacrylonitrile, acrylonitrile/styrene copolymer (AS), methacrylonitrile/styrene copolymer, acrylonitrile/butadiene/styrene copolymer (ABS) and methacrylonitrile/styrene/butadiene copolymer (MBS); a polymethacrylate-based resin such as polymethyl methacrylate (PMMA) and polyethyl methacrylate (PEMA); a polyvinyl ester-based resin such as polyvinyl acetate (PVAc); a polyvinyl-based resin such as polyvinylidene chloride (PVDC), polyvinyl chloride (PVC), vinyl chloride/vinylidene chloride copolymer and vinylidene chloride/methyl acrylate copolymer; a cellulose-based resin such as cellulose acetate and cellulose butyrate; a polycarbonate-based resin such as polycarbonate (PC); a polyimide-based resin such as thermoplastic polyimide (PI), polyamideimide (PAI) and polyetherimide; a fluorine-based resin such as polyvinylidene fluoride (PVDF), polyvinyl fluoride (PVF), ethylene/tetrafluoroethylene copolymer (ETFE), polychlorotrifluoroethylene (PCTFE), ethylene/chlorotrifluoroethylene copolymer (ECTFE), tetrafluoroethylene/hexafluoropropylene copolymer (TFE/HFP, FEP), tetrafluoroethylene/hexafluoropropylene/vinylidene fluoride copolymer (TFE/HFP/VDF, THV) and tetrafluoroethylene/fluoro(alkylvinylether) copolymer (PFA); a thermoplastic polyurethane-based resin; a polyurethane elastomer; a polyester elastomer; and a polyamide elastomer. The above-described polyamide resin specified in the present invention may be also stacked, and in view of the balance of film strength and the gas barrier property, it is preferred to stack a polymetaxylylene adipamide (polyamide MXD6) or an ethylene/vinyl acetate copolymer saponified product (EVOH) .

Furthermore, an unstretched or uniaxially or biaxially stretched thermoplastic resin film or sheet, or an arbitrary base material other than a thermoplastic resin, such as paper, metal-based material, woven fabric, nonwoven fabric, metal cotton and wood, may be also stacked. Examples of the metal-based material include a metal or metal compound, such as aluminum, iron, copper, nickel, gold, silver, titanium, molybdenum, magnesium, manganese, lead, tin, chromium, beryllium, tungsten and cobalt, an alloy steel such as stainless steel made of two or more kinds of these metals or metal compounds, and alloys such as aluminum alloy, copper alloy (e.g., brass, bronze) and nickel alloy.

The thickness of the polyamide film may be appropriately determined according to the use and is not particularly limited, but if the thickness of the polyamide film is excessively large, although the strength of the polyamide film is enhanced, the transparency or flexural fatigue resistance is impaired, whereas if the thickness is too small, the oxygen gas barrier property and water vapor barrier property are deteriorated. Considering these facts, in the case of a polyamide

single-layer film, the thickness is preferably from 5 to 100 μm, more preferably from 10 to 80 μm, still more preferably from 15 to 60 μm. Also, in the case of a laminate film, the thickness is, in terms of the thickness of the raw material polyamide resin composition layer, preferably from 2 to 100 μm, more preferably from 3 to 80 μm, still more preferably from 5 to 60 μm.

In the case where the polyamide film is a stretched film, the shrinkage percentage when dipped in hot water at 80°C (hot water shrinkage percentage) is, in both the vertical and transverse directions (machine and transverse directions), preferably 5% or more, more preferably 8% or more, still more preferably 10% or more. Thanks to such a shrinkage percentage, even after the smoked product is cooled, the casing can keep tight adherence to the contents and a wrinkleless and taut final packaged product can be provided.

The polyamide film preferably has a water vapor permeability as measured at 40°C and 90% RH (relative humidity) of 1,000 g/m$^2$•day or more, more preferably 1,200 g/m$^2$•day or more. When the water vapor permeability is not less than the value above, during long-term storage of the packaged food, putrefaction of the contents due to oxygen or the loss in weight of water can be suppressed and the flavor and taste of the contents can be maintained.

Also, the yellow index (YI) in the polyamide film is preferably 20 or less, and in this case, a film ensuring a dullness-free color tone suitable as a film for food packaging is obtained.

Furthermore, the glossiness (gloss value) in the polyamide film is preferably 70% or less, and thanks to the small glossiness, a high-quality finished film offering a matte texture is obtained.

The polyamide film in the first aspect of the present invention is excellent in the film-forming property and stretchability at the time of film production and moreover, has appropriate properties such as hot water shrinkage percentage, creep property, toughness, gas barrier property and dimensional stability. The polyamide film also exhibits excellent smoked effect and high-level oxygen gas barrier property during storage and is useful for long-term storage of a food package subjected to a smoking treatment. In particular, the polyamide film is suitable as a casing film for filling and packaging therein, for example, a food sensitive to oxygen, including a processed livestock product such as ham, sausage, bacon and meats, a milk product such as cheese, a processed seafood product such as fish sausage, and a processed agricultural product such as konjac and Uiro, or a fluid or semifluid food such as egg product and cooked food.

The second aspect of the present invention is described below.

The polyamide resin composition (A1) for use in the second aspect of the present invention contains from 80 to 98 mass% of (A) a polyamide resin and from 2 to 20 mass% of (B) a vinyl amide-based polymer, and the polyamide resin composition (A2) contains from 70 to 98 mass% of (A) a polyamide resin and from 2 to 30 mass% of (C) a crosslinked poly(N-vinyl lactam).

The polyamide resin (A) for use in the second aspect of the present invention is the same as the polyamide resin (A) for use in the first aspect of the present invention, and this is as described in the first aspect of the present invention (paragraphs 0020 to 0027).

The vinyl amide-based polymer (B) in the second aspect of the present invention is also the same as the vinyl amide-based polymer (B) for use in the first aspect of the present invention, and this is as described in the first aspect of the present invention (paragraphs 0028 to 0047) .

In the polyamide resin composition (A1), as for the blending ratio of the polyamide resin (A) and the vinyl amide-based polymer (B), the ratio between the polyamide resin (A) and the vinyl amide-based polymer (B) is (A):(B) = from 80:20 to 98:2 mass%, preferably from 85:15 to 95:5 mass%. If the blending amount of the vinyl amide-based polymer (B) is less than the value above, hydrophilicity cannot be imparted and the effects of the present invention are not brought out, whereas if it exceeds the value above, the yellow index (YI) becomes high and the vinyl amide-based polymer (B) tends to readily drop off by an operation such as treatment with water or oil.

As to the method for blending the vinyl amide-based polymer (B) in the polyamide resin (A), various additives are blended, if desired, to the polyamide resin (A) and the vinyl amide-based polymer (B), and these are mixed by a known method, whereby the composition is produced. Examples of the method include a dry blending method of directly adding the raw materials at the shaping by using a tumbler or a mixer, a kneading method of previously melt-kneading the raw materials, in a concentration used at the shaping, by using a single-screw or twin-screw extruder Banbury mixer, a kneader, a mixing roll or the like, and a masterbatch method of previously kneading the raw materials in a high concentration by using a single-screw or twin-screw extruder, and diluting it before use at the shaping. In the present invention, the production method is preferably performed by a kneading method of previously melt-kneading the raw materials or a masterbatch method, because entanglement of the vinyl amide-based polymer (B) with the polyamide resin (A) can be intensified.

The crosslinked poly(N-vinyl lactam) (C) in the second aspect of the present invention is fundamentally the same as the crosslinked poly(N-vinyl lactam) (C) used in the first aspect of the present invention, and description in the first aspect of the present invention (paragraphs 0048 to 0053) may be referred to.

However, the average particle of the crosslinked poly(N-vinyl lactam) (C) in the second aspect of the present invention is not limited to 10 to 70 μm unlike in the second aspect of the present invention.

The crosslinked poly(N-vinyl lactam) (C) is preferably a crosslinked poly(N-vinyl-2-pyrrolidone) obtained by

the popcorn polymerization method. The popcorn polymerization can be performed by a known method such as precipitation polymerization or bulk polymerization. The crosslinked poly(N-vinyl lactam) (C) is obtained in a powder form having an average particle diameter of 5 μm to 5 mm, but preferably, the crosslinked poly(N-vinyl lactam) (C) contains substantially no particle having a particle diameter of 150 μm or more and has an average particle diameter of 10 to 100 μm, more preferably from 10 to 70 μm. If the average particle diameter exceeds the value above, fish eye gal is generated to impair the film appearance and at the same time, continuous productivity may be reduced due to conspicuous clogging of an aggregate of the crosslinked poly(N-vinyl lactam) (C) in the filter. On the other hand, if the average particle diameter is less than the value above, the crosslinked poly(N-vinyl lactam) (C) is liable to aggregate and this rather generates fish eye gel. Also, even when the aggregation can be prevented, a film surface profile offering a high-quality finished matte appearance cannot be obtained. In the case where the particle diameter of the crosslinked poly(N-vinyl lactam) (C) is not in the range above, a pulverization treatment or classification is preferably performed in advance.

In the polyamide resin composition (A2), as for the blending ratio of the polyamide resin (A) and the crosslinked poly(N-vinyl lactam) (C), the ratio between the polyamide resin (A) and the crosslinked poly(N-vinyl lactam) (C) is (A):(C) = from 70:30 to 98:2 mass%, preferably from 75:25 to 97:3 mass%, more preferably from 80:20 to 95:5 mass%. If the blending amount of the crosslinked poly(N-vinyl lactam) (C) is less than the value above, hydrophilicity cannot be imparted and the effects of the present invention are not brought out, whereas if it exceeds the value above, the crosslinked poly(N-vinyl lactam) (C) tends to readily drop off by an operation such as treatment with water or oil.

As to the method for blending the crosslinked poly(N-vinyl lactam) (C) with the polyamide resin (A) in the second aspect of the present invention, various additives are blended, if desired, to the polyamide resin (A) and the crosslinked poly(N-vinyl lactam) (C), and these are mixed by a known method, whereby the composition is produced. The blending method may be the same as the blending method of the polyamide resin (A) with the vinyl amide-based polymer (B) and the crosslinked poly(N-vinyl lactam) (C) in the first aspect of the present invention (paragraph 0057). A kneading method of previously melt-kneading the raw materials or a masterbatch method is preferred, because entanglement of the crosslinked poly(N-vinyl lactam) (C) with the polyamide resin (A) can be intensified.

To the polyamide resin compositions (A1) and (A2) in the second aspect of the present invention, various additives and modifiers the same as those described in the first aspect can be added within the range not impairing the properties of the film obtained (paragraph 0058).

Furthermore, in the polyamide resin compositions (A1) and (A2), the same bisamide compound, amorphous polyamide and semiaromatic polyamide as those described in the first aspect are preferably blended in the same blending amount as above (paragraph 0059 to 0069).

The polyamide-based laminate film according to the second aspect of the present invention comprises at least two or more layers having a layer (a) formed of (A1) a polyamide resin composition containing (A) a polyamide resin and (B) a vinyl amide-based polymer and a layer (b) formed of (A2) a polyamide resin composition containing (A) a polyamide resin and (C) a crosslinked poly(N-vinyl lactam), wherein the layer (b) formed of the polyamide resin composition (A2) is disposed as an exposed surface layer and the layer (a) formed of the polyamide resin composition (A1) is disposed on the side opposite the exposed surface with respect to the layer (b).

The polyamide-based laminate film of the present invention can be suitably used as a food packaging film having a portion that is, in use, put into contact with a processed meat product such as ham, sausage, bacon, beef and turkey, a processed fish product, a processed fish paste product such as kamaboko (fish sausage) and chikuwa (fish sausage), or a food such as cheese. In this case, the exposed surface layer works out to the layer disposed in the portion put into contact with a food and, in the present invention, is defied as an innermost layer (food contact surface). In the polyamide-based laminate film, the layer (b) formed of (A2) a polyamide resin composition containing (A) a polyamide resin and (C) a crosslinked poly(N-vinyl lactam) is disposed as the innermost layer. The layer (a) formed of (A1) a polyamide resin composition containing (A) a polyamide resin and (B) a vinyl amide-based polymer is disposed on the side opposite the exposed surface with respect to the layer (b) formed of (A2) a polyamide resin composition containing (A) a polyamide resin and (C) a crosslinked poly(N-vinyl lactam), i.e., disposed, in a state of being contacted with the layer (b), in the direction opposite the surface that is put into contact with food (food contact surface), and/or the layer (b) and the layer (a) are each disposed in contact with another layer interposed therebetween.

The polyamide-based laminate film of the present invention can be more preferably used as a film for transfer of liquid smoke to food and when the surface coming into contact with food of the layer (b) formed of the polyamide resin composition (A2) and disposed as an innermost layer (food contact surface) of the polyamide-based laminate film is treated with a liquid smoke solution, thanks to appropriate surface roughness of the film surface, a smoking agent can uniformly permeate the film and be absorbed, so that a sufficiently large amount of a smoking agent can be held in the polyamide-based laminate film and at the same time, excellent slipperiness can be obtained. Furthermore, since the layer (b) formed of the polyamide resin composition (A2) is disposed as an innermost layer (food contact surface), on contacting with the film by an operation such as treatment with water or oil, elution of the compound blended can be suppressed. In addition, in view of food hygiene, the polyamide resin (A) constituting the polyamide resin composition (A2) is preferably a polyamide 6 polymer.

Thereafter, a food such as edible meat is filled in the polyamide-based laminate film and subjected to a heating treatment such as cooking, whereby the smoking agent can be uniformly and sufficiently transferred to the food and a high-grade smoked food can be easily obtained. However, if the layer (a) formed of the polyamide resin (A1) is not contained, the water vapor permeability of the polyamide-based laminate film is reduced and the above-described smoking effect is not adequately brought out.

The polyamide-based laminate film according to the second aspect of the present invention is produced as a substantially amorphous unoriented unstretched laminate film by using the polyamide resin compositions (A1) and (A2) by a co-extrusion method or the like. For example, a co-extrusion T-die method where resin raw materials melted by separate extruders are continuously extruded from a T-die and formed into a film shape while cooling the extrudates on a casting roll, a co-extrusion water-cooling inflation method where extrudates are continuously extruded from an annular die and cooled through contact with water, or a co-extrusion air-cooling inflation method where extrudates are extruded similarly from an annular die and cooled with air, may be used. The produced film can be used as a substantially unoriented unstretched laminate film, but in view of strength and gas barrier property of the obtained film, a biaxially stretched laminate film is preferred. As the shaping method of the original film for stretched film, a co-extrusion T-die method and a co-extrusion water-cooling inflation method are particularly excellent in terms of continuous stretching.

The stretching and the subsequent heat treatment of the obtained unstretched laminate film may be the same as those in the first aspect (paragraphs 0071 to 0073).

The surface treatment and the secondary processing of the obtained polyamide-based laminate film may be also the same as those in the first aspect (paragraph 0074).

In the polyamide-based laminate film according to the second aspect of the present invention, the number of layers in the entirety is not particularly limited and may be any as long as the laminate film is a laminate film consisting of at least two layers containing the layer (a) formed of the polyamide resin composition (A1) and the layer (b) formed of the polyamide resin composition (A2). Judging from the mechanism of the film or laminate production apparatus, the number of layer is 8 or less, preferably from 2 to 7.

The polyamide-based laminate film in the second aspect of the present invention has a good appearance with little yellow tint and a large water vapor permeability and is excellent in the smoking treatment effect, elusion resistance and slipperiness, and this film has a high utility value by itself, but for imparting additional functions or obtaining a profitably advantageous laminate film, a base material layer formed of other thermoplastic resins may be provided on the further outer side of the laminate film, i.e., in the direction opposite the exposed surface, other than the two layer of layer (a) and layer (b).

As other thermoplastic resins, those described as a thermoplastic resin which can be stacked on the polyamide film in the first aspect can be used (paragraph 0077). In the polyamide-based laminate film in the second aspect of the present invention, it is also preferred to further stack a polyolefin-based resin.

Also, in the polyamide-based laminate film according to the second aspect of the present invention, an arbitrary base material other than a thermoplastic resin may be stacked similarly to the first aspect (paragraph 0078) .

The thickness of the polyamide-based laminate film according to the second aspect of the present invention may be appropriately determined depending on the use and is not particularly limited but is preferably from 5 to 200 $\mu$m, more preferably from 10 to 150 $\mu$m, still more preferably from 12 to 100 $\mu$m. If the thickness of the entire film is less than the value above, the balance of the gas barrier property and flexural fatigue resistance may be impaired, whereas if it exceeds the value above, the film sometimes becomes hard and in the case of further laminating a resin, the film becomes very thick as a whole and may not be suited for soft packaging.

In the polyamide-based laminate film, the thickness of each layer is not particularly limited and may be adjusted according to the kind of the polymer constituting each layer, the number of layer in the entire laminate film, the use, or the like, but the thickness of each layer is determined by taking into consideration the characteristics of the polyamide-based laminate film, such as gas barrier property, mechanical property, flexibility and transparency, and in general, the thickness of each of the layer (a) and the layer (b) is preferably from 3 to 90% based on the thickness of the entire laminate film. In view of water vapor permeability, the thickness of the layer (a) is preferably from 5 to 70%, more preferably from 10 to 50%, based on the thickness of the entire polyamide-based laminate film.

In the case where the polyamide-based laminate film is a stretched film, the shrinkage percentage when dipped in hot water at 80°C (hot water shrinkage percentage) is, in both the vertical and transverse directions (machine and transverse directions), preferably 5% or more, more preferably 8% or more, still more preferably 10% or more. When the shrinkage percentage is not less than the value above, even after the smoked product is cooled, the casing can keep tight adherence to the contents and a wrinkleless and taut final packaged product can be provided.

The polyamide-based laminate film preferably has a water vapor permeability as measured at 40°C and 90% RH (relative humidity) of 600 $g/m^2$•day or more, more preferably 700 $g/m^2$•day or more. When the water vapor permeability is not less than the value above, during long-term storage of the packaged food, putrefaction of the contents due to oxygen or the loss in weight of water can be suppressed and the flavor and taste of the contents can be maintained. Also, the yellow index (YI) in the polyamide-based laminate film is preferably 10 or less, and in this case, a film ensuring

a dullness-free color tone suitable as a film for food packaging is obtained.

The polyamide-based laminate film in the second aspect of the present invention has a good appearance with little yellow tint and a large water vapor permeability and is excellent in the smoking treatment effect, elusion resistance and slipperiness, thus satisfying all of the film appearance, the water vapor permeability and the smoking treatment effect in a high level. This laminate film allows for easy permeation of water content containing a smoking flavor and a seasoning ingredient and is suitable for smoking treatment and on the other hand, this film is appropriately impermeable to a gas, has a strength sufficiently high to withstand the casing processing such as clipping, shirring and filling of the contents, and therefore, is suitable as a film for transfer of liquid smoke to food.

An example of the polyamide-based laminate film in the second aspect of the present invention is shown by a schematic view and a photograph. Fig. 1 is a perspective view and a cross-sectional view showing an example of the film of the present invention used for packaging a smoked food. Fig. 2 is a perspective view showing an example of a smoked food packaged in the multilayer film of the present invention.

As shown in Fig. 1, the laminate film 2 for packaging a food 1 in its inside comprises, for example, a layer (a) and a layer (b), where the layer (b) works out to a food contact surface and the layer (a) is located on the side opposite the food with respect to the layer (b).

The present invention is described in greater detail below by referring to Examples and Comparative Examples, but the present invention is not limited to these Examples as long as the purpose of the present invention is observed.

## EXAMPLES

The materials used in Examples and Comparative Examples and the evaluation methods of the film are described below.

(I) [Examples 1 to 7 and Comparative Examples 1 to 8] [Materials Used]

(A) Polyamide Resin

(A-1) Polyamide 6/66 copolymer:

UBE NYLON5033B, produced by Ube Industries, Ltd., relative viscosity: 4.0, melting point: 198°C (A-2) Polyamide 6 polymer:
UBE NYLON1022B, produced by Ube Industries, Ltd., relative viscosity: 3.35, melting point: 220°C (B) Vinyl Amide-Based Polymer

(B-1) Poly(N-vinyl-2-pyrrolidone) polymer:

Luvitec K90, produced by BASF Japan Ltd. (mass average molecular weight: 1,500,000)

(B-2) Poly(N-vinyl-2-pyrrolidone) polymer:

Luvitec K30, produced by BASF Japan Ltd. (mass average molecular weight: 50,000)

(C) Crosslinked poly(N-vinyl lactam)

(C-1) Crosslinked poly(N-vinyl-2-pyrrolidone):

Polyplasdone XL-10, produced by ISP Japan Ltd. (average particle diameter: 30 μm)

(C-2) Crosslinked poly(N-vinyl-2-pyrrolidone):

Luvicross, produced by BASF Japan Ltd. (average particle diameter: 100 μm)

[Glossiness (Gloss)]

The glossiness (gloss value) was measured in accordance with ASTM D-523 by using a color computer, SM-5-IS-2B, manufactured by Suga Test Instruments Co., Ltd. When the gloss value was 70% or less, it was judged that a sufficiently matte texture was obtained.

[Yellow Index (YI)]

A sample of 5.0 cm in length and 5.0 cm in width was cut out of the film for evaluation, four sheets of the sample were stacked, and the yellow index (YI) was measured using a color computer, SM-5-IS-2B, manufactured by Suga Test Instruments Co., Ltd. When the YI value was 20% or less, it was judged that a film with little yellow tint was obtained.

[Oxygen Permeability]

The oxygen permeability was measured in accordance with ASTM D-3985 by using MOCON-OX-TRAN2/20 manufactured by Modern Control Co. under the conditions of 23°C and 0% RH (relative humidity).

[Water Vapor Permeability]

The water vapor permeability was measured in accordance with ASTM F-1770 by using a moisture permeability measuring apparatus, MAS1000, manufactured by MAS under the conditions of 40°C and 90% RH (relative humidity). When the water vapor permeability was 1,000 $g/m^2$•day or more, it was judged that the water vapor permeability was excellent.

[Smoking Evaluation Test]

A tubular film was filled with about 300 g of a pork sausage raw material comprising 70 mass% of pork, 20 mass% of water, 7 mass% of starch and 3 mass% of common salt, and both ends were sealed with a clip to obtain a package. Each of the packages obtained was dried in a smoke chamber for 15 minutes under the conditions of a temperature of 60°C and a humidity of 10 to 30% RH (relative humidity, then processed by smoking for 90 minutes under the conditions of a temperature of 60°C and a humidity of 40 to 60% RH (relative humidity), and immediately cooled in cooling water at 5 to 10°C for 10 minutes. The smoke effect of the obtained package was judged by a sensory test (panelist test) of confirming the smoke effect.
The evaluation of the sensory test (panelist test) was performed on the following basis.

0: Smoked effect was not recognized (no smoke effect).
1: Smoked effect was slightly recognized.
2: Smoked effect was distinctly recognized.
3: Smoked effect was highly recognized.
4: Smoked effect was very highly recognized.

[Continuous Productivity]

The raw material resin composition was melted at an extrusion temperature of 260°C by using an extruder of 40 mm in diameter equipped with a circular die and withdrawn under cooling with water at 20°C to continuously produce an unstretched film. The differential pressure of the filter during shaping was measured, and the filter was regarded as being clogged at the point when a significant increase was observed in the differential pressure. In the case where an increase of the differential pressure was not observed within the test time of 8 hours, the continuous productivity was judged as good. Incidentally, a filter mesh having a size of 80/125/125/80/80/125/125/80 was used.

Example 1:

A mixture obtained by blending (A) Polyamide Resin (A-1), (B) Vinyl Amide Based Polymer (B-1) and (C) Crosslinked Poly(N-Vinyl Lactam) (C-1) in a ratio shown in Table 1 was supplied to a twin-screw extruder (Model TEX30, manufactured by Japan Steel Works, Ltd.), melt-kneaded under the conditions of an extruder preset temperature of 250°C and a screw rotation speed of 100 rpm, granulated and dried to obtain a polyamide resin composition.

Thereafter, a composition prepared by blending 0.08 parts by mass of ethylenebisstearylamide per 100 parts by mass of pellet of the polyamide resin composition in a cylindrical mixer was melted at an extrusion temperature of 260°C by using an extruder having a single full flight screw of 40 mm in diameter and being equipped with a circular die and withdrawn under cooling with water at 20°C to obtain a substantially amorphous unoriented tubular polyamide unstretched film. Subsequently, the film was stretched at a stretching temperature of 160°C in a stretch ratio of 3.0 times (in both mechanical and transverse directions) by a tubular stretching method where the film is stretched simultaneously in the vertical and transverse directions (machine and transverse directions) by inflation with a gas pressure, whereby a cylindrical biaxially stretched polyamide film having a fold width of 70 mm and a thickness of 25 μ was obtained. The measurement results of physical properties of the obtained biaxially stretched polyamide film are shown in Table 1. Also, the continuous productivity was examined by the method described above, and the results are shown in Table 1.

Examples 2 to 5:

Biaxially stretched polyamide films were obtained by the same method as in Example 1 except for changing the blending amounts of (B) Vinyl Amide Based Polymer (B-1) and (C) Crosslinked Poly(N-Vinyl Lactam) (C-1) to the amounts shown in Table 1 in Example 1. The measurement results of physical properties of the obtained biaxially stretched polyamide films are shown in Table 1. Also, the continuous productivity was examined by the method described above, and the results are shown in Table 1.

Example 6:

A biaxially stretched polyamide film was obtained by the same method as in Example 2 except for changing (B) Vinyl Amide Based Polymer (B-1) to (B-2) in Example 2. The measurement results of physical properties of the obtained biaxially stretched polyamide film are shown in Table 1. Also, the continuous productivity was examined by the method described above, and the results are shown in Table 1.

Example 7:

A biaxially stretched polyamide film was obtained by the same method as in Example 1 except for changing (A) Polyamide Resin (A-1) to (A-2) in Example 1. The measurement results of physical properties of the obtained biaxially stretched polyamide film are shown in Table 1. Also, the continuous productivity was examined by the method described above, and the results are shown in Table 1.

Comparative Example 1:

A biaxially stretched polyamide film was obtained by the same method as in Example 1 except for not using (B) Vinyl Amide Based Polymer (B-1) and (C) Crosslinked Poly(N-Vinyl Lactam) (C-1) in Example 1. The measurement results of physical properties of the obtained biaxially stretched polyamide film are shown in Table 1. Also, the continuous productivity was examined by the method described above, and the results are shown in Table 1.

Comparative Examples 2 and 3:

Biaxially stretched polyamide films were obtained by the same method as in Example 1 except for changing the blending amounts of (B) Vinyl Amide Based Polymer (B-1) and (C) Crosslinked Poly(N-Vinyl Lactam) (C-1) to the amounts shown in Table 1 in Example 1. The measurement results of physical properties of the obtained biaxially stretched polyamide films are shown in Table 1. Also, the continuous productivity was examined by the method described above, and the results are shown in Table 1.

Comparative Examples 4 and 5:

Biaxially stretched polyamide films were obtained by the same method as in Example 6 except for changing the blending amounts of (B) Vinyl Amide Based Polymer (B-2) and (C) Crosslinked Poly(N-Vinyl Lactam) (C-1) to the

amounts shown in Table 1 in Example 6. The continuous productivity was examined by the method described above, and the results are shown in Table 1.

Comparative Example 6:

A biaxially stretched polyamide film was obtained by the same method as in Example 6 except for changing (C) Crosslinked Poly(N-Vinyl Lactam) (C-1) to (C-2) in Example 6. The continuous productivity was examined by the method described above, and the results are shown in Table 1.

Comparative Example 7:

A biaxially stretched polyamide film was obtained by the same method as in Example 1 except for not using (B) Vinyl Amide Based Polymer (B-1), changing (C) Crosslinked Poly(N-Vinyl Lactam) (C-1) to (C-2), and changing the blending amount of (C) Crosslinked Poly(N-Vinyl Lactam) (C-2) to the amount shown in Table 1 in Example 1. The continuous productivity was examined by the method described above, and the results are shown in Table 1.

Comparative Example 8:

A biaxially stretched polyamide film was obtained by the same method as in Example 6 except for not using (C) Crosslinked Poly(N-Vinyl Lactam) (C-1) and changing the blending amount of (B) Vinyl Amide Based Polymer (B-2) to the amount shown in Table 1 in Example 6. The continuous productivity was examined by the method described above, and the results are shown in Table 1.

Table 1

| | (A) Polyamide Resin | Blending Amount [mass%] | (B) Vinyl Amide-Based Polymer | Blending Amount [mass%] | (C) Cross-linked Poly(N-Vinyl Lactam) | Blending Amount [mass%] | Gross [%] | YI [-] | Oxygen Permeability (23°C, 0% RH) [ml/$m^2$•day•MPa] | Water Vapor Permeability (40°C, 90% RH) [g/$m^2$•day] | Evaluation of Smoking | Continuous Productivity |
|---|---|---|---|---|---|---|---|---|---|---|---|---|
| Example 1 | A-1 | 84 | B-1 | 8 | C-1 | 8 | 45 | 2 | 320 | 1200 | 2 | >8 h |
| Example 2 | A-1 | 84 | B-1 | 4 | C-1 | 12 | 40 | 2 | 360 | 1100 | 2 | >8 h |
| Example 3 | A-1 | 84 | B-1 | 12 | C-1 | 4 | 60 | 4 | 340 | 1500 | 3 | >8 h |
| Example 4 | A-1 | 76 | B-1 | 12 | C-1 | 12 | 44 | 4 | 380 | 1600 | 3 | >8 h |
| Example 5 | A-1 | 92 | B-1 | 4 | C-1 | 4 | 66 | -1 | 280 | 1000 | 2 | >8 h |
| Example 6 | A-1 | 84 | B-2 | 4 | C-1 | 12 | 44 | 6 | 360 | 1100 | 2 | >8 h |
| Example 7 | A-2 | 84 | B-1 | 8 | C-1 | 8 | 46 | 2 | 300 | 1100 | 2 | >8 h |
| Comparative Example 1 | A-1 | 100 | - | - | - | - | 120 | -10 | 240 | 270 | 0 | >8 h |
| Comparative Example 2 | A-1 | 99 | B-1 | 0.5 | C-1 | 0.5 | 103 | -8 | 260 | 400 | 1 | >8 h |
| Comparative Example 3 | A-1 | 60 | B-1 | 20 | C-1 | 20 | 32 | 8 | 440 | 2000 | 4 | <8 h |
| Comparative Example 4 | A-1 | 84 | B-2 | 1 | C-1 | 15 | 36 | 6 | 350 | 850 | 1 | <8 h |
| Comparative Example 5 | A-1 | 84 | B-2 | 15 | C-1 | 1 | 97 | 23 | 360 | 1680 | 3 | >8 h |
| Comparative Example 6 | A-1 | 84 | B-2 | 4 | C-2 | 12 | 38 | 8 | 420 | 950 | 1 | <8 h |
| Comparative Example 7 | A-1 | 84 | - | - | C-2 | 16 | 36 | 2 | 400 | 800 | 1 | <8 h |
| Comparative Example 8 | A-1 | 84 | B-2 | 16 | - | - | 95 | 38 | 380 | 1700 | 3 | >8 h |

As apparent from Table 1, in Comparative Example 1 not using the components (B) and (C), the film was not matte-finished, giving a poor film appearance, and was insufficient in the water vapor permeability and the smoking effect. In Comparative Example 2 where even when the components (B) and (C) were used in combination, the ratio therebetween was out of the range specified in the present invention and the blending amounts of the components (B) and (C) were less than the specified ranges, the film was not matte-finished, giving a poor film appearance, and was insufficient in the water vapor permeability and the smoking effect. In Comparative Example 3 where the blending amounts of the components (B) and (C) exceeded the specified ranges, the yellow index was high and the continuous productivity was poor. In Comparative Example 4 where the blending ratio of the components (B) and (C) was less than the range specified in the present invention, the film was insufficient in the water vapor permeability and the smoking effect. In Comparative Example 5 where the blending ratio of the components (B) and (C) exceeded the range specified in the present invention, the yellow index was high and a matte film was not obtained. In Comparative Example 6 using a component (C) having an average particle diameter out of the range specified in the present invention, the film was poor in the water vapor permeability and the smoking effect as well as in the continuous productivity. In Comparative Example 7 using only the component (C), the water vapor permeability was small and the film was poor in the smoking effect as well as in the continuous productivity. In Comparative Example 8 using only the component (B), the yellow index was high and a film having a matte texture was not obtained.
On the other hand, it was evident that the films of Examples 1 to 7 obtained from a polyamide resin composition specified in the present invention have a matte texture, a good film appearance with little yellow tint, a large water vapor permeability, and an excellent smoking treatment effect and are reduced in the trouble of filter clogging and excellent in the continuous productivity.

(II) [Examples 11 to 15 and Comparative Examples 11 to 16]

[Materials Used]

The same as in Examples 1 to 7 and Comparative Examples 1 to 8.

[Yellow Index (YI)]

A sample of 5.0 cm in length and 5.0 cm in width was cut out of the film for evaluation, four sheets of the sample were stacked, and the yellow index (YI) was measured using a color computer, SM-5-IS-2B, manufactured by Suga Test Instruments Co., Ltd. When the YI value was 10 or less, it was judged that a film with little yellow tint was obtained.

[Oxygen Permeability]

The same as in Examples 1 to 7 and Comparative Examples 1 to 8.

[Water Vapor Permeability]

The water vapor permeability was measured in accordance with ASTM F-1770 by using a moisture permeability measuring apparatus, MAS1000, manufactured by MAS under the conditions of 40°C and 90% RH (relative humidity). When the water vapor permeability was 600 $g/m^2 \cdot day$ or more, it was judged that the water vapor permeability was excellent.

[Smoking Evaluation Test]

The same as in Examples 1 to 7 and Comparative Examples 1 to 8.

[Elution Resistance]

A test was performed based the elution test (evaporation residue test method) of JHOSPA for each of the case where n-heptane was used as the liquid for leaching and the case where water was used. Using 300 ml of a test solution (in the case of using heptane as the liquid for leaching, a concentrated solution obtained by transferring 300 ml of n-heptane to a Kjeldahl flask and concentrating it under reduced pressure to several ml, and a wash liquid obtained by washing the flask twice with about 5 ml of heptane for each wash), the film was dipped in the test solution and treated at a temperature of 25°C for 60 minutes in the case of n-heptane and at 95°C for 30 minutes in the case of water, and the solution was sampled in a quartz-made evaporation dish having a known weight, which was previously dried at 105°C, then evaporated to dryness on a water bath, further dried at 105°C for 2 hours, and allowed to cool in a desiccator.

After cooling, the evaporation dish was weighed, the weight difference a (mg) between before and after was determined, and the amount of evaporation residue was calculated according to the following formula:

$$\text{Evaporation residue } (\mu g/ml) = ((a-b)\times 1000)/\text{amount of test solution sampled (ml)}$$

Here, b: the blank value (ml) obtained using the liquid for leaching in the same amount as that of the test solution. When the evaporation residue was 30 μg/ml or less in both cases where n-heptane was used as the liquid for leaching and where water was used, the elution resistance was judged as adequate.

[Slipperiness]

The obtained cylindrical laminate biaxially stretched film was cut open, and the coefficient of dynamic friction between innermost surfaces of the film was measured at 23°C and 50% RH in accordance with ASTMD-1894. The measurement was performed 5 times, and the average value thereof was determined. When the coefficient of dynamic friction was 0.5 or less, it was judged that the slipperiness of the film was excellent.

Example 11:

A mixture obtained by blending (A) Polyamide Resin (A-1) and (B) Vinyl Amide Based Polymer (B-1) in a ratio shown in Table 2 was supplied to a twin-screw extruder (Model TEX30, manufactured by Japan Steel Works, Ltd.), melt-kneaded under the conditions of an extruder preset temperature of 250°C and a screw rotation speed of 100 rpm, granulated and dried to obtain (A1) Polyamide Resin Composition (A1-1).
Similarly, a mixture obtained by blending (A) Polyamide Resin (A-1) and (C) Crosslinked Poly(N-Vinyl Lactam) (C-1) in a ratio shown in Table 2 was supplied to a twin-screw extruder (Model TEX30, manufactured by Japan Steel Works, Ltd.), melt-kneaded under the conditions of an extruder preset temperature of 250°C and a screw rotation speed of 100 rpm, granulated and dried to obtain (A2) Polyamide Resin Composition (A2-1).
Also, a mixture obtained by blending (A) Polyamide Resin (A-2) and (C) Crosslinked Poly(N-Vinyl Lactam) (C-1) in a ratio shown in Table 2 was supplied to a twin-screw extruder (Model TEX30, manufactured by Japan Steel Works, Ltd.), melt-kneaded under the conditions of an extruder preset temperature of 250°C and a screw rotation speed of 100 rpm, granulated and dried to obtain (A2) Polyamide Resin Composition (A2-2).
Composition prepared by blending 0.08 parts by mass of ethylenebisstearylamide per 100 parts by mass of (A1) Polyamide Resin Composition (A1-1) and (A2) Polyamide Resin Compositions (A2-1), and (A2-2) in a cylindrical mixer were separately melted by using an extruder of 40 mm in diameter equipped with a circular three-layer die at an extrusion temperature of 240°C for (A1-1) and (A2-1) and an extrusion temperature of 260°C for (A2-2) and withdrawn under cooling with water at 20°C to obtain a substantially amorphous unoriented laminate stretched film having a layer configuration of (b)/(a)/(b'), wherein the layer (a) is the layer formed of (A1) Polyamide Resin Composition (A1-1), the layer (b) is the layer formed of (A2) Polyamide Resin Composition (A2-1), and the layer (b') is the layer formed of (A2) Polyamide Resin Composition (A2-2). Subsequently, the film was stretched at a stretching temperature of 150°C in stretch ratios of 3.0 times (in both mechanical and transverse directions) by a tubular stretching method where the film is stretched simultaneously in the vertical and transverse directions (machine and transverse directions) by inflation with a gas pressure, whereby a cylindrical laminate biaxially stretched film having a fold width of 70 mm and a thickness of (b)/(a)/(b')=10/15/10 μm was obtained. The measurement results of physical properties of the obtained laminate biaxially stretched film are shown in Table 2.

Examples 12 and 13:

Laminate biaxially stretched films were obtained by the same method as in Example 11 except for changing the blending amounts of (B) Vinyl Amide Based Polymer (B-1) and (C) Crosslinked Poly(N-Vinyl Lactam) (C-1) to the amounts shown in Table 2 in Example 11. The measurement results of physical properties of the obtained laminate biaxially stretched films are shown in Table 2.

Example 14:

A laminate biaxially stretched film was obtained by the same method as in Example 11 except for changing (C) Crosslinked Poly(N-Vinyl Lactam) (C-1) to (C-2) in Example 11. The measurement results of physical properties of

the obtained laminate biaxially stretched film are shown in Table 2.

Example 15:

A cylindrical laminate biaxially stretched film having a thickness of (c)/(a)/(b)=10/15/10 μm, where the layer (a) is the layer formed of (A1) Polyamide Resin Composition (A1-1), the layer (b) is the layer formed of (A2) Polyamide Resin Composition (A2-2), and the layer (c) is the layer formed of (A) Polyamide Resin Composition (A-1), was obtained by the same method as in Example 11 except for changing (A2) Polyamide Resin (A2-1) to (A) Polyamide 6/66 Copolymer (A-1) in Example 11. The measurement results of physical properties of the obtained laminate biaxially stretched film are shown in Table 2.

Comparative Example 11:

A laminate biaxially stretched film was obtained by the same method as in Example 11 except for not using (B) Vinyl Amide Based Polymer (B-1) and (C) Crosslinked Poly(N-Vinyl Lactam) (C-1) in Example 11. The measurement results of physical properties of the obtained laminate biaxially stretched film are shown in Table 2.

Comparative Examples 12 and 13:

Laminate biaxially stretched films were obtained by the same method as in Example 11 except for changing the blending amounts of (B) Vinyl Amide Based Polymer (B-1) and (C) Crosslinked Poly(N-Vinyl Lactam) (C-1) to the amounts shown in Table 2 in Example 11. The measurement results of physical properties of the obtained laminate biaxially stretched film are shown in Table 2.

Comparative Example 14:

A laminate biaxially stretched film was obtained by the same method as in Example 14 except for not using (B) Vinyl Amide Based Polymer (B-1) in Example 14. The measurement results of physical properties of the obtained laminate biaxially stretched film are shown in Table 2.

Comparative Example 15:

A laminate biaxially stretched film was obtained by the same method as in Example 14 except for changing (B) Vinyl Amide Based Polymer (B-1) to (B-2) and not using (C) Crosslinked Poly(N-Vinyl Lactam) (C-2) in Example 14. The measurement results of physical properties of the obtained laminate biaxially stretched film are shown in Table 2.

Comparative Example 16:

A laminate biaxially stretched film was obtained by the same method as in Example 11 except for changing (A1) Polyamide Resin Composition (A1-1) to (A1-3) and changing the layer configuration to that shown in Table 2 in Example 11. The measurement results of physical properties of the obtained laminate biaxially stretched film are shown in Table 2.

Table 2

| | | (A1) Polyamide Resin Composition | | | | | | (A2) Polyamide Resin Composition | | | | |
|---|---|---|---|---|---|---|---|---|---|---|---|---|
| | Layer | Kind | (A) Poly-amide Resin | Blending Amount [mass%] | (B) Vinyl Amide-Based Polymer | Blending Amount [mass%] | Layer | Kind | (A) Poly-amide Resin | Blending Amount [mass%] | (C) Crosslinked Poly(N-Vinyl Lactam) | Blending Amount [mass%] |
| Example 11 | (a) | (A1-1) | (A-1) | 88 | (B-1) | 12 | (b) | (A2-1) | (A-1) | 88 | (C-1) | 12 |
| | | | | | | | (b') | (A2-2) | (A-2) | 88 | (C-1) | 12 |
| Example 12 | (a) | (A1-1) | (A-1) | 92 | (B-1) | 8 | (b) | (A2-1) | (A-1) | 92 | (C-1) | 8 |
| | | | | | | | (b') | (A2-2) | (A-2) | 92 | (C-1) | 8 |
| Example 13 | (a) | (A1-1) | (A-1) | 82 | (B-1) | 18 | (b) | (A2-1) | (A-1) | 80 | (C-1) | 20 |
| | | | | | | | (b') | (A2-2) | (A-2) | 80 | (C-1) | 20 |
| Example 14 | (a) | (A1-1) | (A-1) | 88 | (B-1) | 12 | (b) | (A2-3) | (A-1) | 88 | (C-2) | 12 |
| | | | | | | | (b') | (A2-4) | (A-2) | 88 | (C-2) | 12 |
| Example 15 | (a) | (A1-1) | (A-1) | 88 | (B-1) | 12 | (c) | (A-1) | (A-1) | 100 | - | - |
| | | | | | | | (b) | (A2-2) | (A-2) | 88 | (C-2) | 12 |
| Comparative Example 11 | (c) | (A-1) | (A-1) | 100 | - | - | (c) | (A-1) | (A-1) | 100 | - | - |
| | | | | | | | (c') | (A-2) | (A-2) | 100 | - | - |
| Comparative Example 12 | (a) | (A1-1) | (A-1) | 99 | (B-1) | 1 | (b) | (A2-1) | (A-1) | 99 | (C-1) | 1 |
| | | | | | | | (b') | (A2-2) | (A-2) | 99 | (C-1) | 1 |
| Comparative Example 13 | (a) | (A1-1) | (A-1) | 65 | (B-1) | 35 | (b) | (A2-1) | (A-1) | 65 | (C-1) | 35 |
| | | | | | | | (b') | (A2-2) | (A-2) | 65 | (C-1) | 35 |
| Comparative Example 14 | (c) | (A-1) | (A-1) | 100 | - | - | (b) | (A2-3) | (A-1) | 88 | (C-2) | 12 |
| | | | | | | | (b') | (A2-4) | (A-2) | 88 | (C-2) | 12 |
| Comparative Example 15 | (a) | (A1-2) | (A-1) | 88 | (B-2) | 12 | (c) | (A-1) | (A-1) | 100 | - | - |
| | | | | | | | (c') | (A-2) | (A-2) | 100 | - | - |
| Comparative Example 16 | (a) | (A1-3) | (A-2) | 88 | (B-1) | 12 | (b) | (A2-1) | (A-1) | 88 | (C-1) | 12 |
| | | | | | | | (b') | (A2-2) | (A-2) | 88 | (C-1) | 12 |

(continued)

| | Layer Configuration, Thickness [μm] | Gross | YI | Oxygen Permeability (23°C, 0% RH) | Water Vapor Permeability (40°C, 90% RH) | Evaluation of Smoking | Elution Resistance | | Coefficient of Dynamic Friction (23°C, 50 RH% [-] |
|---|---|---|---|---|---|---|---|---|---|
| | | [%] | [-] | [ml/m²•day•MPa] | [g/m²•day] | | Heptane | Water | |
| Example 11 | (b)/(a)/(b') =10/15/10 | 48 | 4 | 280 | 1100 | 3 | 3 | 10 | 0.40 |
| Example 12 | (b)/(a)/(b') =10/15/10 | 52 | 2 | 260 | 860 | 2 | 2 | 8 | 0.42 |
| Example 13 | (b)/(a)/(b') =10/15/10 | 34 | 6 | 330 | 1400 | 3 | 4 | 14 | 0.38 |
| Example 14 | (b)/(a)/(b') =10/15/10 | 46 | 4 | 310 | 1050 | 3 | 3 | 10 | 0.38 |
| Example 15 | (c)/(a)/(b) =10/15/10 | 64 | 1 | 250 | 750 | 2 | 3 | 11 | 0.39 |
| Comparative Example 11 | (c)/(c)/(c') =10/15/10 | 120 | -8 | 200 | 200 | 0 | 0.2 | 3 | >1.0 |
| Comparative Example 12 | (b)/(a)/(b') =10/15/10 | 103 | -2 | 220 | 280 | 1 | 0.5 | 4 | >1.0 |
| Comparative Example 13 | (b)/(a)/(b') =10/15/10 | 28 | 12 | 370 | 1500 | 4 | 40 | 220 | 0.35 |
| Comparative Example 14 | (b)/(c)/(b') =10/15/10 | 48 | 2 | 330 | 550 | 2 | 0.3 | 3 | 0.38 |
| Comparative Example 15 | (c)/(a)/(c') =10/15/10 | 116 | 26 | 240 | 650 | 1 | 5 | 38 | >1.0 |
| Comparative Example 16 | (b)/(b')/(a) =10/10/15 | 47 | 4 | 260 | 950 | 2 | 6 | 40 | 0.85 |

As apparent from Table 2, in Comparative Example 11 not using (B) Vinyl Amide-Based Polymer (B-1) and (C) Crosslinked Poly(N-Vinyl Lactam) (C-1), the laminate film was insufficient in the water vapor permeability, the smoking effect and the slipperiness. In Comparative Example 12 where even when the components (B) and (C) were used in combination, the ratio therebetween was out of the range specified in the present invention and the blending amounts of the components (B) and (C) were less than the specified range, the film was insufficient in the water vapor permeability, the smoking effect and the slipperiness. In Comparative Example 13 where the blending amounts of the components (B) and (C) exceeded the specified range, the yellow index was high and the elution resistance was poor. In Comparative Example 14 using on the component (C) Crosslinked Poly(N-Vinyl Lactam) (C-2), the water vapor permeability was low and the smoking effect was insufficient. In Comparative Example 15 using only the component (B) Vinyl Amide-Based Polymer (B-2), the laminate film has a high yellow index and poor in the elution resistance and the slipperiness. In Comparative Example 16 where a layer (b) formed of (A2) a polyamide resin composition containing (A) a polyamide resin and (C) a crosslinked poly(N-vinyl lactam) was not disposed as an innermost layer, the smoking effect and the slipperiness were insufficient.
On the other hand, it was evident that the laminate films of Examples 11 to 15 specified in the second aspect of the present invention have good film appearance with very little yellow tint and large water vapor permeability and are excellent in the smoking treatment effect, elution resistance and slipperiness.

## Claims

1. A polyamide resin composition for a film, comprising (A) a polyamide resin, (B) a vinyl amide-based polymer and (C) a crosslinked poly(N-vinyl lactam) having an average particle diameter of 10 to 70 μm, with the blending ratio thereof being such that the blending ratio between the polyamide resin (A) and the total amount of the vinyl amide-based polymer (B) and the crosslinked poly(N-vinyl lactam) (C) is (A):((B)+(C)) = from 70:30 to 98:2 mass% and the blending ratio between the vinyl amide-based polymer (B) and the crosslinked poly(N-vinyl lactam) (C) is (B)/(C) = from 80/20 to 20/80 (by mass).

2. The polyamide resin composition for a film as claimed in claim 1, wherein the vinyl amide-based polymer (B) is a poly(N-vinyl-2-pyrrolidone) and the crosslinked poly(N-vinyl lactam) (C) is a crosslinked (poly(N-vinyl-2-pyrrolidone).

3. The polyamide resin composition for a film as claimed in either one of claims 1 and 2, wherein the polyamide resin (A) is a homopolymer or copolymer comprising, as a constituent unit, at least one unit selected from the group consisting of a caprolactam unit, a hexamethylene adipamide unit and a dodecane lactam unit.

4. The polyamide resin composition for a film as claimed in claim 3, wherein said polyamide resin (A) is any one selected from the group consisting of a polyamide 6 polymer, a polyamide 6/66 copolymer, a polyamide 6/12 copolymer and a polyamide 6/66/12 copolymer.

5. A polyamide film comprising the polyamide resin composition for a film claimed in any one of claims 1 to 4.

6. A biaxially-stretched polyamide film comprising the polyamide resin composition for film claimed in any one of claims 1 to 4.

7. A smoking casing film comprising the polyamide resin composition for film claimed in any one of claims 1 to 4.

8. The film as claimed in any one of claims 5 to 7, wherein the water vapor permeability measured at 40°C and 90% RH (relative humidity) is 1,000 $g/m^2$•day or more, the yellow index (YI) is 20 or less, and the glossiness (gloss value) is 70% or less.

9. A packaged smoked food obtained by packaging a smoked food in the film claimed in any one of claims 1 to 8.

10. A polyamide-based laminate film comprising at least two or more layers having a layer (a) formed of (A1) a polyamide resin composition containing from 80 to 98 mass% of (A) a polyamide resin and from 2 to 20 mass% of (B) a vinyl amide-based polymer and a layer (b) formed of (A2) a polyamide resin composition containing from 70 to 98 mass% of (A) a polyamide resin and from 2 to 30 mass% of (C) a crosslinked poly(N-vinyl lactam), wherein the layer (b) formed of the polyamide resin composition (A2) is disposed as an exposed surface layer and the layer (a) formed of the polyamide resin composition (A1) is disposed on the side opposite said exposed surface with respect to the layer (b).

**11.** The polyamide-based laminate film as claimed in claim 10, wherein said polyamide resin (A) is any one selected from the group consisting of a polyamide 6 polymer, a polyamide 6/66 copolymer, a polyamide 6/12 copolymer and a polyamide 6/66/12 copolymer.

**12.** The polyamide-based laminate film as claimed in claim 10 or 11, wherein the vinyl amide-based polymer (B) is a poly(N-vinyl-2-pyrrolidone) and the crosslinked poly(N-vinyl lactam) (C) is a crosslinked (poly(N-vinyl-2-pyrrolidone).

**13.** The polyamide-based laminate film as claimed in any one of claims 10 to 12, wherein in said laminate film, the polyamide resin (A) constituting the polyamide resin composition (A2) is a polyamide 6 polymer.

**14.** The polyamide-based laminate film as claimed in any one of claims 10 to 13, comprising from 2 to 7 layers.

**15.** The polyamide-based laminate film as claimed in any one of claims 10 to 14, which is a polyamide-based laminate biaxially-stretched film stretched 2.0 times or more in each of the vertical and transverse directions.

**16.** The polyamide-based laminate film as claimed in any one of claims 10 to 15, which is used as a film for transfer of liquid smoke to food.

**17.** A packaged smoked food obtained by packaging a smoked food in the film claimed in any one of claims 10 to 16, wherein the layer (b) formed of the polyamide resin composition (A2) is disposed as an innermost layer coming into contact with a food and the layer (a) formed of the polyamide resin composition (A1) is disposed on the outer side with respect to the layer (b).

Fig.1

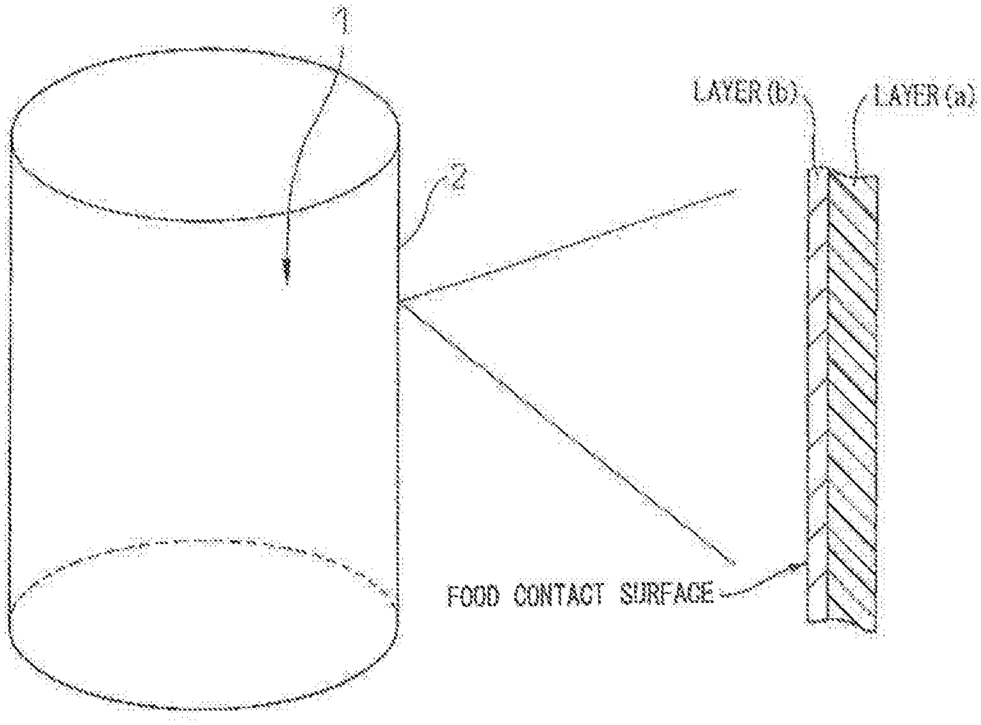


Fig.2

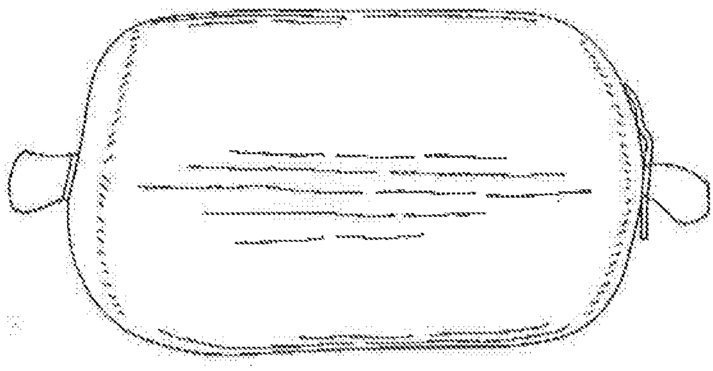

**INTERNATIONAL SEARCH REPORT**

International application No. PCT/JP2010/055146

A. CLASSIFICATION OF SUBJECT MATTER
*C08L77/00*(2006.01)i, *A23B4/03*(2006.01)i, *B32B27/34*(2006.01)i, *C08J5/18*(2006.01)i, *C08L39/06*(2006.01)i

According to International Patent Classification (IPC) or to both national classification and IPC

B. FIELDS SEARCHED

Minimum documentation searched (classification system followed by classification symbols)
C08L77/00, A23B4/03, B32B27/34, C08J5/18, C08L39/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2006-523254 A (Vector USA Inc.),<br>12 October 2006 (12.10.2006),<br>entire text<br>& US 2004/0197583 A1 & US 2004/0224174 A1<br>& US 2008/0182035 A1 & EP 1601714 A<br>& EP 1605779 A & WO 2004/083287 A1<br>& WO 2004/082401 A1 | 10-14,16,17<br>15<br>1-9 |
| A | JP 10-66846 A (Toray Industries, Inc.),<br>10 March 1998 (10.03.1998),<br>claims; paragraphs [0010], [0011]<br>(Family: none) | 10-14,16,17 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>12 May, 2010 (12.05.10) | Date of mailing of the international search report<br>25 May, 2010 (25.05.10) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

| International application No. |
|---|
| PCT/JP2010/055146 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-526546 A (Kalle GmbH),<br>24 November 2006 (24.11.2006),<br>entire text<br>& US 2006/0202397 A1 & EP 1624760 A<br>& WO 2004/098298 A2 & DE 10320327 A | 15 |
| Y | US 7361392 B2 (ATLANTIS-PAK),<br>22 April 2008 (22.04.2008),<br>entire text<br>& WO 2002/078455 A1 & DE 10295683 T<br>& RU 2182107 C & UA 74611 C<br>& CN 1461189 A | 15 |
| Y | JP 2002-306059 A (Gunze Kobunshi Corp.),<br>22 October 2002 (22.10.2002),<br>claims; paragraphs [0017], [0020]; examples<br>& US 2004/0191368 A1 & EP 1380212 A1<br>& WO 2002/085129 A1 & DE 60222646 D | 15 |
| A | WO 2005/046339 A1 (Gunze Ltd.),<br>26 May 2005 (26.05.2005),<br>entire text<br>& US 2008/0026112 A1 | 1-17 |
| A | JP 58-104940 A (Hoechst AG.),<br>22 June 1983 (22.06.1983),<br>entire text<br>& US 4720343 A & US 5009824 A<br>& EP 82433 A2 & DE 3149976 A | 1-17 |
| A | JP 3-196822 A (Hoechst AG.),<br>28 August 1991 (28.08.1991),<br>entire text<br>& US 5152894 A & EP 382009 A1<br>& DE 3903098 A & DE 59008872 C<br>& NO 900475 A & AT 120982 E | 1-17 |

Form PCT/ISA/210 (continuation of second sheet) (July 2009)

**INTERNATIONAL SEARCH REPORT**

International application No.
PCT/JP2010/055146

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☒ Claims Nos.: part of claims 1, 3-11, and 13-17
because they relate to parts of the international application that do not comply with the prescribed requirements to such an extent that no meaningful international search can be carried out, specifically:
See extra sheet.

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

INTERNATIONAL SEARCH REPORT

International application No.
PCT/JP2010/055146

Continuation of Box No.II-2 of continuation of first sheet(2)

Of the "vinylamide polymers (B)" and "crosslinked poly(N-vinyllactam)s (C)" given in claims 1, 3-11, and 13-17, combinations of "poly(N-vinyl-2-pyrrolidone) (B)" and "a crosslinked poly(N-vinyl-2-pyrrolidone) (C)" are the only examples specifically disclosed. In view of this, combinations of the other "vinylamide polymers (B)" and the other "crosslinked poly(N-vinyllactam)s (C)" are not considered to be disclosed in the meaning of PCT Article 5. Those claims are hence not considered to be sufficiently supported in the meaning of PCT Article 6.

Consequently, a search for the inventions in those claims was made for the part disclosed in and supported by the description.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7361392 B
- JP 2002306059 A
- JP 2005515501 A
- JP 5430027 A
- JP 339087 A
- JP 6178808 A
- JP 6178809 A
- US 2938017 A
- US 3277066 A
- US 3759880 A
- JP 5842201 A


### Non-patent literature cited in the description


- *Polymer Journal,* 1985, vol. 17 (1), 143-152